# EUROPEAN PATENT SPECIFICATION

(11) **EP 1 827 125 B1**
(45) Date of publication and mention of the grant of the patent: **01.09.2010**
(21) Application number: 05786768.1
(22) Date of filing: 30.09.2005
(51) Int. Cl.: A23G 4/00

(54) **BIODEGRADABLE CHEWING GUM COMPRISING BIODEGRADABLE POLYMER WITH HIGH GLASS TRANSITION TEMPERATURE**
BIOLOGISCH ABBAUBARER KAUGUMMI, DER EIN BIOLOGISCH ABBAUBARES POLYMER MIT HOHER GLASÜBERGANGSTEMPERATUR ENTHÄLT
CHEWING-GUM BIODEGRADABLE COMPRENANT UN POLYMERE BIODEGRADABLE A HAUTE TEMPERATURE DE TRANSITION VITREUSE

(30) Priority: 22.12.2004 WO PCT/DK2004/000906
(43) Date of publication of application: 05.09.2007
(73) Proprietor: Gumlink A/S, 7100 Vejle (DK)
(72) Inventor: WITTORFF, Helle, DK-7120 Vejle Øst (DK); NEERGAARD, Jesper, DK-8362 Horning (DK)
(74) Representative: Olesen, Kaj
(86) International application number: PCT/DK2005/000626
(87) International publication number: WO 2006/066575

(56) References cited:
- WO-A-00/19837
- WO-A-2004/028267
- US-A- 5 672 367

## Description

### FIELD OF THE INVENTION

The present invention relates to the field or chewing gum, In particular, the present invention provides a gum base and a chewing gum comprising a biodegradable polymer having a glass transition temperature (Tg) above 40°C.

### TECHNICAL BACKGROUND AND PRIOR ART

It is generally recognized that chewing gum that is dropped in indoor or outdoor environments gives rise to considerable nuisances and inconveniences due to the fact that the dropped gum sticks firmly to e.g. street and pavement surfaces and to shoes and clothes of people being present or moving in the environments. Adding substantially to such nuisances and inconveniences is the fact that conventional chewing gum products are based on the use of elastomeric and resinous polymers of natural or synthetic origin that are substantially non-degradable in the environment.

Cleaning off the dropped chewing gum remnants is often costly and without satisfactory results.

Attempts to reduce the nuisances associated with the widespread use of chewing gum have e.g. involved improvement of cleaning methods or incorporation of anti-sticking agents into chewing gum formulations. However, none of these precautions have contributed significantly to solving the pollution problem.

In recent time an increasing amount of interest has been paid to synthetic polyesters, which are hydrolysable to smaller compounds, which are more easily degradable by environmental effects and/or removed via metabolic pathways.

In US 5,672,367 it has been disclosed that chewing gum may be made from certain synthetic polymers having in their polymer chains chemically unstable bonds that can be broken under the influence of light or hydrolytically into water-soluble and non-toxic components. In US 5,672,367 such polymers, which are obtained by the polymerization of cyclic esters, e.g. lactides, glycolides, and ε-caprolactone, are referred to as biodegradable. Furthermore according to the same document such polymers as applied in chewing gum have a glass transition temperature of at most 37°C

The upper limit of the glass transition temperature being substantially at human body temperature is a general assumption throughout the prior art within the area of biodegradable chewing gum polymers. The importance of keeping the glass transition temperature of chewing gum polymers substantially below human body temperature seams to be a logical consequence of the basic properties related to the glass transition temperature (Tg). Usually Tg is loosely defined as the temperature at which a polymer undergoes a significant change in properties. Accordingly, Tg may be described as the temperature where a polymer structure turns "rubbery" upon heating and "glassy" upon cooling.

Therefore, the glass transition temperature is in the prior art of biodegradable chewing gum polymers generally kept substantially below human body temperature.

An example of such prior art chewing gum polymer is disclosed in WO 00/19837 wherein it is stated that caprolactone may be toxic and should be avoided as a masticatory substance. As the applied polymer comprises no low-Tg-inducing monomers, the Tg is found to be too high. Therefore a large amount of plasticizer is used to obtain a poly(D,L-lactic acid) polymer with a lower Tg. According to WO 00/19837, the Tg is shifted from a higher value to a lower, whereby the resulting polymer according to WO 00/19837 is much more rubbery and elastic.

A drawback of using these large amounts of plasticizer such as triacetin in chewing gum may be that the robustness of the chewing gum is compromised, especially if the chewing gum contains rather aggressive chewing gum ingredients such as acids or fats.

US-A-2006/014 094 (corresponding to WO-A-2004/034 804) discloses a gum base comprising a poly-L-lactic acid polymer having a Tg higher than 50°C and an emulsifying plasticiser.

Another approach in order to obtain a combined advantageous texture and a robustness with respect to gum base or chewing gum components is to mix the biodedegradable polymer with different kinds of natural resins. The resin compounds are contributing to obtain the desired masticatory properties and acting as plasticizers for the elastomers of the gum base composition.

Resin in conventional chewing gum bases typically include synthetic resins such as polyvinyl acetate (PVA) and natural resins such as rosin esters, which are often referred to as ester gums. Additionally, natural resins such as glycerol esters of partially hydrogenated rosins, glycerol esters of polymerized rosins, glycerol esters of partially dimerized rosins, glycerol esters of tally oil rosins, pentaerythritol esters of partially hydrogenated rosins, methyl esters of rosins, partially hydrogenated methyl esters of rosins and pentaerythritol esters of rosins are typically applied in chewing gum bases. Other resinous compounds typically applied in chewing gum bases include synthetic resins such as terpene resins derived from alpha-pinene, beta-pinene, and/or d-limonene and natural terpene resins.

It is an object of the present invention to avoid the application of natural resin because of lack of degradability of these components.

The synthetic resin polyvinyl acetate (PVA) is substantially non-degradable in the environment and thus the use of this resin polymer in gum bases has a high influence on the non-degradability of chewing gum. PVA is usually added to a gum base in amounts dependent upon the molecular weight range, and thereby i.e. provides stretch or elasticity to the gum base. The total amount of PVA used in a gum base composition is usually from about 5% to 95% by weight based on the total gum base composition. Typically, the amount of PVA in chewing gum bases is in the range of 10-30%, and thus constitutes a major part of the entire gum base composition. As this synthetic resin is substantially non-degradable in the environment, this component in the gum base contributes significantly to the overall non-degradability of chewing gum based on such gum bases.

It is an object of the invention to create a biodegradable polymer, suited for chewing gum and with improved degradability.

It is a further object of the present invention to prepare a chewing gum comprising a polymer, which is particularly degradable and may substitute the resin part of a chewing gum.

It is a further object of the invention to obtain a chewing gum polymer having improved biodegradability properties with respect to e.g. degradation process and/or the degradation residues.

### SUMMARY

The invention relates to a chewing gum comprising at least one biodegradable polymer in an amount of from about 0.1 % to about 95 %, said biodegradable polymer having a glass transition temperature (Tg) above 40°C, further comprising at least one elastomeric compound, wherein the biodegradable polymer has a plasticising effect on the elastomeric compound.

In an embodiment of the invention the biodegradable polymer has a molecular weight (Mn) within the range of approximately 500 to 60000 g/mol and wherein said chewing gum comprises less than approximately 5% by weight of natural resins.

According to an embodiment of the invention, a high Tg of the low molecular weight polymer component of the chewing gum, namely the biodegradable component having a molecular weight (Mn) within the range of approximately 500 to 400000 g/mol, results in an improved effect of the applied low molecular weight polymer. In other words, according to the invention an improved effect of the low molecular weight polymer component has been obtained. Such improvement may e.g. result in the possibility of reducing the overall amount of the low molecular weight polymers which may be significant with respect to stability. This is in particular the fact when dealing with biodegradable chewing gum.

The amount of natural resins in the final chewing gum should be kept low due to the fact that the desired biodegradability is compromised by the nature of the natural resins available.

Moreover, according to an embodiment of the invention, the use of high-Tg polymers facilitates the use of high-Tg-inducing monomers, which may be regarded as more biodegradable when dealing with e.g. lactide-based or glycolide- based biodegradable polymers. Thus, degradability of lactone-polymers is not as fast as either lactide- or glycolide-polymers, and furthermore the degradation products of lactone-polymers are less preferred than those of lactide and/or glycolide polymers. Moreover, the application of high-Tg properties according to the invention facilitates use of advantageous polymer monomers. According to an advantageous embodiment of the invention, a biodegradable polymer may be made substantially on the basis of lactides and/or glycolides alone and/or the content of lactones may be minimized.

According to a preferred embodiment of the invention, the chewing should comprise less than approximately 2% by weight of natural resins.

In an embodiment of the invention, said chewing gum comprises said at least one biodegradable polymer in an amount of from about 2 to 60 % by weight.

In an embodiment of the invention, said chewing gum is substantially free of natural resins.

According to a preferred embodiment of the invention, use of natural resins should be avoided in order to obtain a chewing gum, which may be regarded as completely biodegradable due to the fact that natural resins features very little biodegradability, if any, compared to typical synthetic polyester-based polymers.

The natural resins, which according to the present invention should be avoided, include natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins.

According to an embodiment of the present invention, even those natural resins, which according to some litterature may have some degradability over very long periods and at elevated temperatures, are also not acceptable according to the present invention in any considerable amount.

Other resinous compounds include synthetic resins such as terpene resins derived from alpha-pincne, beta-pinene, and/or d-limonene, natural terpene resins. Such resins are not regarded as biodegradable according to the present invention. Thus, they are not acceptable according to the present invention in any considerable amount.

It is an object of the present invention to avoid the application of natural resin because of the marked lack of degradability of these components. According to the present invention, the biodegradable polymers with a high Tg of at least 40°C has a larger effect as resinous compounds than biodegradable polymers of lower Tg. Hence, the biodegradable polymers of high Tg may be excellent substitutes for natural resins,

In a further embodiment of the invention, the amount of resin substitute in a chewing gum may be lowered, when applying the effective high-Tg-polymers of the present invention.

The biodegradable polymer with Tg above 40°C functions as plasticizer for the elastomeric part of the chewing gum. In other words, the high Tg biodegradable polymer acts as elastomer plasticizer, which is typically the role of a resinous compound. The biodegradable chewing gum polymer of the present invention may therefore be referred to as a biodegradable resin.

In an embodiment of the invention, the total content of polymers, including one or more biodegradable resins of high Tg and one or more elastomeric compounds, in the final chewing gum may preferably be in the range of 5 to 90%, preferably in the range of 20 to 70% by weight of the chewing gum. A polymer content, which is too low, may result in a chewing gum, which is too soft, which dissolves in the mouth and is completely swallowed or leaving a water insoluble part, which is too small for chewing. On the other hand, if the polymer content is too high, the chewing gum may be extremely hard and/or falling apart. Within the limits of reasonable polymer content, there are various possibilities of adjusting the texture of a chewing gum comprising a biodegradable resin of high Tg according to the present invention.

In an embodiment of the invention, said chewing gum comprises said biodegradable polymer in an amount in the range of 2 to 50 %.

According to the invention, the robustness of the chewing gum may be enhanced by an increase in the amount of the polymer part of the chewing gum. Specifically according to the invention, when keeping the elastomer content at a constant level, while increasing the amount of biodegradable polymer of high Tg according to the invention, the robustness of the chewing gum may be clearly enhanced.

In an embodiment of the invention, said chewing gum comprises said biodegradable polymer in an amount in the range of 5 to 40 %, preferably in the range of 10 to 30 %.

It should be noted, that it is important in the manufacture of chewing gum to bring about a balance between elastomeric and resinous compounds. According to the present invention, a biodegradable polymer of high Tg, which is above human body temperature, is suitable as at least one of the resinous polymers in a chewing gum. The amount of the resinous biodegradable polymer should not encompass the whole polymer part of the chewing gum. Depending on the actual elastomer used, the resin content may advantageously be lowered to make room for a higher content of elastomer, which may improve the texture of the final chewing gum.

In an embodiment of the invention, said chewing gum comprises said biodegradable polymer in an amount in the range of 5 to 25 %.

According to the invention, the final chewing gum texture may be designed by adjusting the amount of high-Tg-polymer. The sufficient amount, according to the present invention, of the biodegradable polymer in a chewing gum may preferably be considerably lower than the amount, which would be necessary in the case of using a comparable polymer with a lower Tg.

In an embodiment of the invention the chewing gum comprises an elastomeric compound in an amount of at least 0.5 %, preferably at least 1 % by weight of the chewing gum.

In an embodiment of the invention the chewing gum comprises an elastomeric compound in an amount of at least 5 %, preferably at least 8 % by weight of the chewing gum.

In an embodiment of the invention the chewing gum comprises an elastomeric compound in an amount within the range of about 1% to 40% by weight of the chewing gum.

According to the present invention, the high-Tg biodegradable polymer may be considered to hereby have a great strength as a resin compound i.e. an advantageous plasticizer or solvent for the elastomeric compound in the chewing gum.

In an embodiment of the invention, said biodegradable polymer has a glass transition temperature (Tg) in the mange of 40°C to 90°C.

Previously it was supposed that polymers applied in chewing gum had to have a Tg-value below human body temperature, because logically Tg would be the limit between a polymer being glassy or being chewable. Now it has surprisingly been found, that it is possible to apply a polymer having a Tg-value well above human body temperature without compromising the chewability of the final chewing gum, as the polymer may provide the function of a resin, i.e. as a plasticizer for an elastomer in the chewing gum.

In an embodiment of the invention, said biodegradable polymer has a glass transition temperature in the range of 41°C to 75°C.

In an embodiment of the invention, said biodegradable polymer has a glass transition temperature in the range of 42°C to 65°C.

In an embodiment of the invention, said biodegradable polymer has a glass transition temperature in the range of 43°C to 48°C.

The present invention relates to a chewing gum comprising biodegradable polymers having favorable resinous properties and being exceedingly degradable. Furthermore the degradation products of the inventive biodegradable chewing gum polymers are notably desirable as they are part of biochemical pathways.

When the Tg of the biodegradable polyester polymer of the invention is a couple of degrees above mouth temperature, but not more than about ten to twenty degrees above mouth temperature, an advantageous embodiment of the invention may be obtained, as the performance as resinous and elastomer plasticizing compound is high without imparting too hard texture in the final chewing gum.

Moreover, a high robustness may be obtained of the chewing gum comprising the biodegradable polymer having Tg in this Tg-range.

In an embodiment of the invention, said biodegradable polymer has a molecular weight (Mn) in the range of 1000 to 40000 g/mol, preferably in the range of 1000 to 25000 g/mol.

According to a preferred embodiment of the invention, a relatively low molecular weight of the relevant biodegradable polymer is one of the factors leading to a desirable texture of the final chewing gum. The low molecular weight polymer should provide the resinous properties, typically a plasticizing effect, which is useful in combination with elastomeric polymers.

In an embodiment of the invention, said biodegradable polymer has a molecular weight (Mn) in the range of 3000 to 22000 g/mol, preferably in the range of 3000 to 15000 g/mol.

According to an embodiment of the invention, the plasticizing effect may be improved, when lowering the molecular weight. A molecular weight somewhat close to the molecular weight of conventional synthetic resins may be preferred.

In an embodiment of the invention, said biodegradable polymer is a polyester.

In an embodiment of the invention, said biodegradable polyester polymer is obtainable by ring-opening polymerization of cyclic monomers.

According to an embodiment of the invention, an advantageous biodegradable polyester polymer may be obtained based on cyclic monomers.

In an embodiment of the invention, said cyclic monomers are selected from the group of cyclic esters and cyclic carbonates.

In an embodiment of the invention, the biodegradable polyester polymer obtained from cyclic esters and/or cyclic carbonates may provide a chewing gum according to the invention with preferred properties with regard to texture and degradability.

In an embodiment of the invention, said cyclic monomers are selected from the group of D,L-lactide, L-lactide, glycolide, ε-caprolactone, δ-valerolactone, trimethylene carbonate (TMC) and dioxanone.

In an embodiment of the invention, at least one of said cyclic monomers is a high-Tg-inducing monomer.

In the present text the terms "high-Tg-inducing monomer" and "low-Tg-inducing monomer" refer to monomers, which when polymerized alone or in their respective groups result in polymers of high- and low Tg, respectively. Herein the resulting polymers of high- and low-Tg may be understood as polymers having a molecular weight of at least 500 Mn. In other words, the terms high- and low-Tg-inducing monomers are used for monomers, which, when polymerized to polymers of at least 500 Mn, may preferably lead to either high or low Tg of the polymer. Herein a high Tg is defined as a Tg above mouth temperature and a low Tg is correspondingly defined as a Tg below mouth temperature.

The chewing gum elastomer plasticizer polymer, also referred to as biodegradable resin according to the present invention may sometimes in the present text be referred to as 'polyester resin' when it is intended to refer to the polymer as being a polyester with resin-like properties.

In an embodiment of the invention the polyester resin comprises monomer units originating from one or more sorts of high-Tg-inducing monomers such as lactide or glycolide forming a homo-polymer or a co-polymer with high Tg.

In an embodiment of the invention, the high-Tg-inducing monomers may be chosen among D,L-lactide, L-lactide, and glycolide.

The observed and desired effect of applying at least one high-Tg-inducing monomer may be to obtain a chewing gum polymer, which is harder and less elastic than usual chewing gum polymers. Such polymer has been observed to imply a pleasing texture in the final chewing gum.

In an embodiment of the invention, said polyester is a polymer obtainable by the polymerization of one single type of high-Tg-inducing monomers.

In an embodiment of the invention, the biodegradable polyester polymer is a homo-polymer based on one type of high-Tg-inducing monomers only. Preferred polymers of this type may be poly(lactide) or poly(glycolide).

In an embodiment of the invention, said polyester is a copolymer obtainable by the polymerization of at least two different high-Tg-inducing monomers.

In an embodiment of the invention, a co-polymer such as a poly(d,l-lactide-co-glycolide) may be applied as the high-Tg-biodegradable polymer in a chewing gum according to the present invention. A purpose of introducing a co-polymer may be that such co-polymer may be more amorphous and less crystalline than a homo-polymer, and that these features may contribute further to the advantageous texture properties of the final chewing gum.

In an embodiment of the invention, said polyester is a copolymer obtainable by the polymerization of at least one low-Tg-inducing monomer with at least one high-Tg-inducing monomer.

In an embodiment of the invention a small percentage of low-Tg-inducing monomers is introduced in the polymer chain to control the Tg of the resulting copolymer. While keeping the Tg above 40°C according to the present invention, the texture of the polymer may according to a preferred embodiment of the invention be adjusted by regulating the percentage of low-Tg-inducing monomers in the copolymer.

In an embodiment of the invention, a high Tg of the biodegradable resin polymer has improved effect as resinous compound, thereby lowering the necessary amount of resin in order to plasticize the elastomer part of the chewing gum.

In an embodiment of the invention, the structure of the high-Tg-biodegradable polymer may be tuned by the balance between high- and low-Tg-inducing monomers in the co-polymer to provide a polymer with elastoplastic and considerably amorph properties. Hereby, a preferred quality of the final chewing gum according to the invention may be achieved.

A polymer having elastoplastic properties may comprise both elastomeric and resinous properties and act as elastomer at lower temperatures and as resin (elastomer plasticizer) at higher temperatures.

In an embodiment of the invention, the molar ratio of the at least one high-Tg-inducing monomer to the at least one low-Tg-inducing monomer is in the range of 75/25 to 99/1, preferably in the range of 85/15 to 99/1.

An advantage of such ratio between low and high Tg-inducing monomers is that improved elastoplastic features may be obtained.

In an embodiment of the invention, the molar ratio of the at least one high-T_{g}-inducing monomer to the at least one low-T_{g}-inducing monomer is in the range of 90/10 to 99/1, preferably in the range of 95/5 to 99/1.

In an embodiment of the invention, the molar ratio of the at least one high-T_{g}- inducing monomer to the at least one low-T_{g}-inducing monomer is in the range of 95/5 to 98/2.

In an embodiment of the invention, said at least one high-Tg-inducing monomer is selected from the group of monomers comprising D,L-lactide, L-lactide and glycolide.

When these monomer units constitute a relatively large part of the polymer an advantage may be obtained with regard to the degradation products. When the goal is to obtain a biodegradable chewing gum, it may provide a significant contribution to the usefulness of the chewing gum that the monomer- or oligomer-degradation products are desirable in the environment. This is what may be obtained by the present invention, as the fraction of lactic acid, glycolic acid etc. as degradation products may be increased compared to the degradation products of prior art biodegradable chewing gum polymers, wherein low-Tg-inducing monomers such as e.g. lactones are often used in higher percentages.

The application of these high-Tg-inducing monomers in the biodegradable resin in the chewing gum of the present invention generally involves some important advantages as regards fast rate of degradability with favorable and non-toxic degradation products. In addition hereto, these monomer compounds may be purchased at low cost.

By increasing the percentage of high-Tg-inducing monomers in the polymer, the Tg of the resulting polymer is raised, and experiments have shown that it is actually possible to obtain desired chewing gum characteristics, when applying such hard and inelastic polymers in chewing gum in combination with an elastomeric compound.

In an embodiment of the invention, said at least one low-Tg-inducing monomer is selected from the group of monomers comprising ε-caprolactone, δ-valerolactone, trimethylene carbonate (TMC) and dioxanone.

As regards polymers made at least partly from these monomers, they may represent some ambiguity with regard to degradation rate. Certainly, they degrade with a much more rapid rate than conventional chewing gum polymers such as PVA or natural resins. However, when compared to high-Tg-polymers such as poly(d,l-lactide), they may be observed to degrade at a slower rate. Hence, when taking degradability aspects into account, the amount of high-Tg-inducing monomers may advantageously be increased

In an embodiment of the invention, ε-caprolactone may be preferred over δ-valerolactone because of cost considerations.

In an embodiment of the invention, said ring-opening polymerization is initiated by one or more initiators.

In an embodiment of the invention, said initiators comprise about 0.01 to 1.0 % by weight of said biodegradable polyester polymer.

In an embodiment of the invention, at least 50 mol %, preferably at least 70 mol % of said initiators are difunctional.

In an embodiment of the invention, the mol percentage of difunctional initiators may be used to control the linearity of the biodegradable polymer. If both difunctional and higher functional initiators are used, an increase in the mol percentage of difunctional initiators may increase the linearity, while an increase in the higher functional initiators may induce more branching in the polymer.

In an embodiment of the invention, an advantageous robustness and texture of the chewing gum may be obtained, when the relatively low molecular weight biodegradable polyester polymer of high Tg obtains a high degree of linearity and crystallinity. Excellent properties as biodegradable resin in the chewing gum may hereby be obtained.

Thus, the excellent resinous properties may be derived from the fact that especially a biodegradable polymer with glass transition temperature above mouth temperature may gain fine elastomer plasticizing properties, when somewhat crystalline and linear regions are introduced therein.

In an embodiment of the invention, a preferred group of difunctional initiators may be diol initiators such as e.g. 1,2-propane diol.

In an embodiment of the invention, said polyester polymer is substantially linear.

In an embodiment of the invention, a high linearity may be associated with an improved elastomer plasticizing function of the high-Tg-biodegradable polymer. Furthermore, a higher linearity may also imply a higher crystallinity, which in an embodiment of the invention may entail that a smaller amount of biodegradable resin polymer is needed in order to obtain the desired texture of the final chewing gum according to the present invention.

In an embodiment of the invention, said substantially linear polyester polymer comprises above 50 percent linear polymer chains.

Accordingly, in an embodiment of the invention, a high percentage linearity of the biodegradable polymer of the invention, may contribute to a high robustness and pleasant texture of the chewing gum.

In an embodiment of the invention, said substantially linear polyester polymer comprises above 70 percent linear polymer chains.

In an embodiment of the invention, said substantially linear polyester polymer comprises above 80 percent linear polymer chains.

Hereby, in an embodiment of the invention, a further improvement may be obtained with regard to elastomer plasticizer function of the high-Tg biodegradable polyester polymer.

In an embodiment of the invention, said biodegradable polyester polymer is obtainable by condensation polymerization of polyfunctional acids or derivatives thereof and/or polyfunctional alcohols or derivatives thereof.

Examples of polycondensation methods of producing polymers from carboxylic acids have been disclosed in US 5,310,865 and US 4,273,920.

In an embodiment of the invention, said polyfunctional acids are selected from the group of lactic acids and glycolic acids.

In an embodiment of the invention, said polyfunctional acids are polyhydroxycarboxylic acids or hydroxycarboxylic acids.

In an embodiment of the invention, said chewing gum comprises an elastomeric compound in an amount of at least 5 %, preferably at least 10 % by weight of the chewing gum.

The amount of elastomeric compound depends on the actually applied elastomer and resin. It has been found that a nice texture of the chewing gum according to the invention may be obtained, when the high-Tg biodegradable resin is combined with an elastomeric compound in a gum base, which is introduced into a standard chewing gum formulation.

In an embodiment of the invention, said at least one elastomeric compound is a biodegradable elastomer.

In order to obtain a highly degradable chewing gum, it may be preferred that both the resinous and the elastomeric parts of the chewing gum are biodegradable.

In an embodiment of the invention, said biodegradable elastomer is obtainable by the polymerization of at least one alcohol or derivative thereof and at least one carboxylic acid or derivative thereof.

Useful elastomers of this kind may be prepared from a large number of different monomers.

In an embodiment of the invention, an advantageous elastomer polymer may be prepared from dimethyl terephthalate, dimethyl adipate, and di(ethylene glycol). Further examples within the scope of the invention include polymers, which may generally be prepared by step-growth polymerization of di-, tri- or higher-functional alcohols or esters thereof with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed.

In another embodiment, useful elastomer compounds may include polyester polymers obtained by the polymerization of one or more cyclic esters such as lactide, glycolide, trimethylene carbonate, δ-valerolactone, β-propiolactone and ε-caprolactone.

Regardless of the monomer composition, the molecular weight of the elastomeric compound may be considerably higher than the molecular weight of the resinous high-Tg biodegradable polymer according to the present invention. Likewise, the glass transition temperature may be much lower for the elastomer.

In an embodiment of the invention, the water content is less than 3 %, preferably less than 1.5 %, and most preferably less than 1 % by weight of the chewing gum.

In some of the most preferred embodiments of the present invention, a low water content in the final chewing gum is of great importance because of the chewing gum content of highly degradable polymers such as poly(lactide). When applying such polymers being particularly susceptible to hydrolytical degradation, a low water content may according to the present invention be a crucial factor to avoid or at least minimize pre-chewing degradation, which is very undesired in the chewing gum. Keeping the water content in the chewing gum low may increase the keeping qualities of the final chewing gum product considerably, and the period of storage before use may be prolonged without compromising the chewing gum taste, appearance and quality.

Thus, due to the large content of particularly degradable polymers in the chewing gum of the present invention, it is a general goal to keep to water content as low as possible.

The chewing gum of the present invention may be manufactured by several different processes such as a batch process, by extrusion, by a one-step process, etc..

The shape of the resulting chewing gum tablet may be any manufacturable geometrical shape, such as round, oval, flattened, stick, etc. The tablet may also be multi-modular, e.g. center-filled.

The chewing gum according to the invention may also be made by means of compression, as a compressed multi-modular table, etc.

In an embodiment of the invention, said chewing gum comprises one or more chewing gum ingredients selected from the group comprising flavoring agents, sweetening agents, fillers, softeners, emulsifiers, and active ingredients.

In an embodiment of the invention, said flavoring agents comprise natural and synthetic flavorings in the form of natural vegetable components, essential oils, essences, extracts, powders, including acids and other substances capable of affecting the taste profile.

In an embodiment of the invention, said chewing gum comprises flavor in an amount of 0.01 to about 25 wt %, preferably in an amount of 0.1 to about 5 wt %, said percentage being based on the total weight of the chewing gum.

In an embodiment of the invention, the chewing gum comprises at least one softener in an amount of about 0 to about 20 % by weight of the chewing gum, more typically about 0 to about 10 % by weight of the chewing gum.

According to the present invention, it has been found that softener may advantageously be added to the chewing gum of the present invention in an amount corresponding to the amount used in conventional chewing gum. According to the present invention, a satisfactory texture of a chewing gum comprising a resinous compound of high Tg may be obtained, even when the amount of added softener is rather low, that is below 10 % or even below 5 % by weight of the chewing gum.

In an embodiment of the invention, the softeners may be selected among tallow, hydrogenated tallow, hydrogenated and partially hydrogenated vegetable oils, cocoa butter, glycerol monostearate, glycerol triacetate, lecithin, mono-, di- and triglycerides, acetylated mono- or diglycerides, fatty acids - such as stearic, palmitic, oleic and linoleic acids, waxes, PGE and mixtures thereof.

In an embodiment of the invention, the amount of emulsifier is in the range of 0 to 18 % by weight of the chewing gum.

In different embodiments of the present invention, the chewing gum may be provided either with or without emulsifier.

In an embodiment of the invention, said sweetening agents are selected from the group comprising bulk sweeteners, and high intensity sweeteners, and combinations thereof.

In an embodiment of the invention, the chewing gum comprises sugar.

In an embodiment of the invention, the chewing gum is sugar free.

In an embodiment of the invention, said bulk sweeteners comprises an amount of about 5 to about 95%, preferably about 20 to about 80% by weight of the chewing gum.

According to the invention, the bulk sweeteners may be sugar sweeteners, non-sugar sweeteners and combinations thereof.

In an embodiment of the invention, the sugar sweeteners may comprise saccharide-containing compounds such as sucrose, dextrose, maltose, dextrins, trehalose, D-tagatose, dried invert sugar, fructose, levulose, galactose, corn syrup solids, alone or in combination.

Moreover, in an embodiment of the invention, the non-sugar sweeteners may comprise sugar alcohols such as sorbitol, mannitol, xylitol, hydrogenated starch hydrolysates, maltitol, isomaltol, erythritol, lactitol, alone or in combination.

In an embodiment of the invention, the chewing gum comprises high intensity sweeteners in an amount of about 0 to about 1.2 %, preferably about 0.1 to about 0.6 % by weight of the chewing gum.

In an embodiment of the invention, the high intensity sweeteners may comprise sucralose, aspartame, salts of acesulfame, alitame, neotame, twinsweet, saccharin and its salts, cyclamic acid and its salts, glycyrrhizin, dihydrochalcones, thaumatin, monellin, stevioside, alone or in combination.

In an embodiment of the invention, the chewing gum comprises filler in an amount of about 0 to about 50% by weight of the chewing gum, more typically about 10 to about 40 % by weight of the chewing gum.

In an embodiment of the invention, the chewing gum comprises at least one coloring agent.

In an embodiment of the invention, said chewing gum ingredients comprise active ingredients.

In an embodiment of the invention, the active ingredients may be selected among medicines, oral compositions, anti-smoking agents, highly potent sweeteners, pH adjusting agents, nutritients, antiseptics, minerals, agents for care or treatment of the oral cavity and the teeth, dietary supplements, other active ingredients and combinations thereof.

In an embodiment of the invention, said chewing gum is coated with an outer coating selected from the group comprising hard coating, soft coating and edible film-coating.

The outer coating may be a sugar coating or a sugarless coating or a combination thereof.

In an embodiment of the invention, the outer coating is a hard coating comprising at least 50 % by weight of a polyol selected from the group comprising sorbitol, maltitol, mannitol, xylitol, erythritol, lactitol and isomalt.

In a further embodiment of the invention, the edible film-coating comprises at least one component selected from the group comprising wax and an edible film-forming agent such as a cellulose derivative, a modified starch, a dextrin, gelatine, shellac, gum arabic, zein, a vegetable gum, a synthetic polymer and any combination thereof.

In an embodiment of the invention, the outer coating comprises at least one additive component selected from the group comprising a binding agent, a moisture absorbing component, a film forming agent, a dispersing agent, an antisticking component, a bulking agent, a flavoring agent, a coloring agent, a pharmaceutically or cosmetically active component, a lipid component, a wax component, a sugar, an acid and an agent capable of accelerating the after-chewing degradation of the degradable polymers.

In an embodiment of the invention, the agent capable of accelerating after-chewing degradation of the degradable polymers may be one or more enzymes selected among those mentioned in PCT/DK2003/000939.

### DETAILED DESCRIPTION

According to a preferred definition of biodegradability according to the invention, biodegradability is a property of certain organic molecules whereby, when exposed to the natural environment or placed within a living organism, they react through an enzymatic or microbial process, often in combination with a chemical process such as hydrolysis, to form simpler compounds, and ultimately carbon dioxide, nitrogen oxides, methane, water and the like.

In the present context the term 'biodegradable polymers' means environmentally or biologically degradable polymer compounds and refers to chewing gum base components which, after dumping the chewing gum, are capable of undergoing a physical, chemical and/or biological degradation, whereby the dumped chewing gum waste becomes more readily removable from the site of dumping or is eventually disintegrated to lumps or particles, which are no longer recognizable as being chewing gum remnants. The degradation or disintegration of such degradable polymers may be effected or induced by physical factors such as temperature, light, moisture, etc., by chemical factors such as oxidative conditions, pH, hydrolysis, etc. or by biological factors such as microorganisms and/or enzymes. The degradation products may be larger oligomers, trimers, dimers and monomers.

Preferably, the ultimate degradation products are small inorganic compounds such as carbon dioxide, nitrogen oxides, methane, ammonia, water, etc.

As referred to herein, the glass transition temperature (Tg) is be determined by for example DSC (DSC: differential scanning calorimetry). The DSC may generally be applied for determining and studying of the thermal transitions of a polymer and specifically, the technique may be applied for the determination of a second order transition of a material. The transition at Tg is regarded as such a second order transition, i.e. a thermal transition that involves a change in heat capacity, but does not have a latent heat. Hence, DSC may be applied for studying Tg. Unless otherwise stated the heating rate used is 10°C/min throughout the application.

Unless otherwise indicated, as used herein with regard to polymers, the term "molecular weight" means number average molecular weight (Mn) in g/mol. Furthermore, as used herein the short form PD designates the polydispersity of polymers, polydispersity being defined as Mw /Mn, where Mw is the weight average molecular weight of a polymer. A well-established technique for characterization of biodegradable polymers is gel permeation chromatography (GPC).

In the present text, it is assumed that the temperature in the mouth of the chewing gum consumer is about human body temperature, although it may in praxis during chewing be a few degrees below body temperature. A glass transition temperature above mouth temperature is herein referred to as a high Tg, whereas a Tg below mouth temperature is herein referred to as a low Tg.

Chewing gum of the present invention typically comprises a water-soluble bulk portion, a water-insoluble chewable gum base portion and flavoring agents. The water-soluble portion dissipates with a portion of the flavoring agent over a period of time during chewing. The gum base portion is retained in the mouth throughout the chew. The term chewing gum refers to both a chewing and bubble type gum in its general sense.

The gum base is the masticatory substance of the chewing gum, which imparts the chew characteristics to the final product. The gum base typically defines the release profile of flavors and sweeteners and plays a significant role in the gum product.

The insoluble portion of the gum typically may contain any combination of elastomers, vinyl polymers, elastomer plasticizers, waxes, softeners, fillers and other optional ingredients such as colorants and antioxidants.

The composition of gum base formulations can vary substantially depending on the particular product to be prepared and on the desired masticatory and other sensory characteristics of the final product. However, typical ranges (% by weight) of the above gum base components are: 5 to 80% by weight elastomeric compounds, 5 to 80% by weight elastomer plasticizers, 0 to 40% by weight of waxes, 5 to 35% by weight softener, 0 to 50% by weight filler, and 0 to 5% by weight of miscellaneous ingredients such as antioxidants, colorants, etc. The gum base may comprise about 5 to about 95 percent, by weight, of the chewing gum, more commonly, the gum base comprises 10 to about 60 percent of the gum.

Elastomers provide the rubbery, cohesive nature to the gum, which varies depending on this ingredient's chemical structure and how it may be compounded with other ingredients. Elastomers suitable for use in the gum base and gum of the present invention may include natural or synthetic types.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

The elastomer compounds may be of natural origin but are preferably of synthetic origin, preferably synthetic polyesters: According to the invention, the resin compounds are preferably biodegradable polymers, and in preferred embodiments, the resin compounds are biodegradable synthetic polyesters. Natural resins of any kind are avoided in the chewing gum of the present invention.

According to the present invention, the chewing gum comprises at least one biodegradable polymer having a high Tg being above 37°C. Furthermore, according to the present invention, these biodegradable polymers are very suitable as resinous compounds in the chewing gum of the present invention. Here below a series of examples of monomer compositions are given, which in tuned molar ratios may be applied for the high-Tg biodegradable polymer, which is part of the chewing gum of the present invention.

According to different embodiments of the invention, a high-Tg biodegradable polymer may comprise at least one of the high-Tg-inducing monomers chosen among lactides or glycolides and possibly one or more low-Tg-inducing monomers chosen among lactones and cyclic carbonates.

The lactone monomers may be selected from the group of ε-caprolactone, δ-valerolactone, γ-butyrolactone, and β-propiolactone, also including ε-caprolactones, δ-valerolactones, γ-butyrolactones, or β-propiolactones that have been substituted with one or more alkyl or aryl substituents at any non-carbonyl carbon atoms along the ring. The carbonate monomers may be chosen from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one.

According to the present invention, some preferred monomers are cyclic monomers such as D,L-lactide, L-lactide, and glycolide, which are high-Tg-inducing, and ε-caprolactone, δ-valerolactone, trimethylene carbonate (TMC) and dioxanone, which are low-Tg-inducing.

In order to obtain the desired high Tg, either homo-polymers or co-polymers of high-Tg-inducing monomers alone are used, or a combination of high- and low-Tg inducing monomers are used, wherein it is important that the ratio between high-Tg inducing monomers and low-Tg inducing monomers is controlled.

According to an embodiment of the invention, some examples of homo-polymers or co-polymers of high-Tg-inducing monomers may include the following: poly(L-lactide); poly(D-lactide); poly(D, L-lactide); poly(mesolactide); poly(glycolide); poly(L-lactide-co-D, L-lactide); poly(L-lactide-co-meso-lactide); poly(L-lactide-co-glycolide); poly(D, L-lactide-co-meso-lactide); poly(D, L-lactide-co-glycolide); poly(mesolactide-co-glycolide), etc..

According to a further embodiment of the invention, one or more high-Tg-inducing monomers and one or more low-Tg-inducing monomers may be polymerized together, the molar ratio of high/low being in the range of 75/25 to 99/1, preferably in the range of 85/15 to 99/1, and typically in the range of 95/5 to 99/1. In other words, the mol percentage of high-Tg-inducing monomers is at least 75%, preferably at least 85%, and typically at least 95% of the total mol number of monomers forming the resulting polymer. While maintaining these ratios, preferred combinations of cyclic monomers may include the following:
D,L-lactide/ε-caprolactone,
D,L-lactide/TMC
D,L-lactide/δ-valerolactone
D,L-lactide/dioxanone
D,L-lactide in combination with any two, three, or four low Tg-inducing monomers

L-lactide/ε-caprolactone
L-lactide/TMC
L-lactide/δ-valerolactone
L-lactide/dioxanone
L-lactide in combination with any two, three, or four low Tg-inducing monomers

D,L-lactide/glycolide/ε-caprolactone
D,L-lactide/glycolide/TMC
D,L-lactide/glycolide/δ-valerolactone
D,L-lactide/glycolide/dioxanone
D,L-lactide/glycolide in combination with any two, three, or four low Tg-inducing monomers

L-lactide/glycolide/ε-caprolactone
L-lactide/glycolide/TMC
L-lactide/glycolide/δ-valerolactone
L-lactide/glycolide/dioxanone
L-lactide/glycolide in combination with any two, three, or four low Tg-inducing monomers

glycolide/ε-caprolactone
glycolide/TMC
glycolide/δ-valerolactone
glycolide/dioxanone
glycolide in combination with any two, three, or four low Tg-inducing monomers

D,L-lactide/L-lactide/ε-caprolactone
D,L-lactide/L-lactide/TMC
D,L-lactide/L-lactide/δ-valerolactone
D,L-lactide/L-lactide/dioxanone
D,L-lactide/L-lactide in combination with any two, three, or four low Tg-inducing monomers

D,L-lactide/L-lactide/glycolide/ε-caprolactone
1,7,L-lactide/L-lactide/glycolide/TMC
D,L-lactide/L-lactide/glycolide/δ-valerolactone
D,L-lactide/L-lactide/glycolide/dioxanone
D,L-lactide/L-lactide/glycolide in combination with any two, three, or four low Tg-inducing monomers

The polymerization of monomers according to the above compositions may according to the invention lead to some very degradable high-Tg polymers, which are suitable as resinous compounds in the chewing gum of the present invention.

A few examples of the resulting high-Tg biodegradable polymers may include poly (L-lactide-co-trimethylenecarbonate); poly (L-lactide-co-epsilon-caprolactone); poly (D, L-lactide-co-trimethylenecarbonate), poly (D, L-lactide-co-epsilon-caprolactone); poly (meso-lactide-co-trimethylenecarbonate); poly (mesolactide-co-epsilon-caprolactone); poly (glycolide-cotrimethylenecarbonate); poly (glycolide-co-epsilon-caprolactone), etc..

According to an embodiment of the invention, the polymerization process to obtain the biodegradable polymer, which is applied in the chewing gum of the present invention, may be initiated by an initiator such as a polyfunctional alcohol, amine or other molecules or compounds with multiple hydroxyl or other reactive groups or mixtures thereof.

According to an embodiment of the invention, examples of suitable multifunctional initiators include but are not limited to glycerol, trimethylolpropane, pentaerythritol, dipentaerythritol, and ethoxylated or propoxylated polyamines.

Furthermore, in a preferred embodiment of the invention, the initiator may be difunctional, and examples of applicable di-functional initiators include di-functional alcohols, and non-limiting examples include 1,2-propane diol, 1,3-butane diol, other alkane diols, ethylene glycol, generally alcohols having two hydroxyl groups, and other di-functional compounds capable of initiating a ring-opening polymerization.

Furthermore, according to the invention, the initiator may comprise in the range of 0.01 to 1.0, preferably 0.05 to 0.8 weight % of the high-Tg biodegradable polyester polymer, which may be applied in the chewing gum of the present invention.

According to an embodiment of the invention, the fraction of initiators in the biodegradable polymer being difunctional or higher functional may be regulated, whereby the degree of linearity and branching may be controlled.

In an embodiment of the invention, the difunctional initiators comprise at least 50 mol % of the total content of initiator molecules applied. Hereby, a considerable linearity may be introduced in the biodegradable polymer according to the present invention, and a certain desired crystallinity may be obtained. Hereby, the biodegradable polyester polymer may gain very suitable properties as elastomer plasticizer, and hence an advantageous biodegradable resin may be provided in the chewing gum of the present invention. To increase the linearity to improve the crystallinity, plasticizing properties and robustness of the chewing gum in an embodiment of the invention, the content of difunctional initiators may be raised to e.g. 60%, 70%, 80%, 90%; or about 100% of the total content of moles initiator molecules applied.

Accordingly, a substantially linear polyester polymer may according to an embodiment of the invention comprise above e.g. 50 or 80 percent linear polymer chains. The biodegradable high-Tg resinous polymers of the present invention are preferably obtainable by ring-opening polymerization. However, the method of production is not limiting for the scope of the present invention. As an example, ring-opening polymerization of lactide is more commonly used as production method than polycondensation of lactic acid (e.g. α-hydroxypropionic acid). This, however, is mainly a matter of process conditions and ease of production. As concerns the resulting polymers, they may be provided with substantially the same composition and properties and being equally applicable in chewing gum according to the present invention. The naming of such polymers is often regarded inter-changeable, thus the names poly(lactide) and poly (lactic acid) may be used for the same polymer.

Generally, the biodegradable polymers used in the chewing gum of the present invention may be homopolymers, copolymers or terpolymers, including graft- and block-polymers.

Useful polymers, which may be applied as elastomers in the chewing gum of the present invention, may generally be prepared by step-growth polymerization of di-, tri- or higher-functional alcohols or esters thereof with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed.

Because polyfunctional carboxylic acids in general are high-melting solids that have very limited solubility in the polycondensation reaction medium, esters or anhydrides of the polyfunctional carboxylic acids are often used to overcome this limitation. Furthermore, polycondensations involving carboxylic acids or anhydrides produce water as the condensate, which requires high temperatures to be driven off. Thus, polycondensations involving transesterification of the ester of a polyfunctional acid are often the preferred process. For example, the dimethyl ester of terephthalic acid may be used instead of terephthalic acid itself. In this case, methanol rather than water is condensed, and the former can be driven off more easily than water. Usually, the reaction is carried out in the bulk (no solvent) and high temperatures and vacuum are used to remove the by-product and drive the reaction to completion.

Specific examples of aliphatic polyfunctional carboxylic acids, which may be useful in the preparation of an elastomer applied in the chewing gum of the present invention, include oxalic, malonic, citric, succinic, malic, tartaric, fumaric, maleic, glutaric, glutamic, adipic, glucaric, pimelic, suberic, azelaic, sebacic, dodecanedioic acid, etc. Likewise, specific examples of aromatic polyfunctional carboxylic acids may be terephthalic, isophthalic, phthalic, trimellitic, pyromellitic and naphthalene 1,4-, 2,3-, 2,6-dicarboxylic acids and the like.

For the purpose of illustration and not limitation, some examples of carboxylic acid derivatives, which may be used for preparation of the elastomer used in the chewing gum of the present invention, include hydroxy acids such as 3-hydroxy propionic acid and 6-hydroxycaproic acid and anhydrides, halides or esters of acids, for example dimethyl or diethyl esters, corresponding to the already mentioned acids, which means esters such as dimethyl or diethyl oxalate, malonate, succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher boiling alcohols are more difficult to remove than lower boiling alcohols. The usually preferred polyfunctional alcohols contain 2 to 100 carbon atoms as for instance polyglycols and polyglycerols.

In the polymerization of an elastomer for use in the chewing gum of the present invention, some applicable examples of alcohols, which may be employed as such or as derivatives thereof, include-polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc.

Generally, the elastomer polymers used in the chewing gum of the present invention may be homopolymers, copolymers or terpolymers, including graft- and block-polymers.

Further suitable examples of additional environmentally or biologically degradable chewing gum base polymers, which may be applied in accordance with the gum base of the present invention, include degradable polyesters, polycarbonates, polyester amides, polypeptides, homopolymers of amino acids such as polylysine, and proteins including derivatives hereof such as e.g. protein hydrolysates including a zein hydrolysate.

In accordance with the general principles in manufacturing a chewing gum within the scope of the invention, variations of different suitable ingredients are listed and explained below.

The chewing gum according to the invention may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

In an embodiment of the invention, the chewing gum comprises softeners in an amount of about 0 to about 18% by weight of the chewing gum, more typically about 0 to about 12% by weight of the chewing gum.

Softeners/emulsifiers may according to the invention be added both in the chewing gum and the gum base.

A gum base formulation may, in accordance with the present invention, comprise one or more softening agents e.g. sucrose esters including those disclosed in WO 00/25598, which is incorporated herein by reference, tallow, hydrogenated tallow, hydrogenated and partially hydrogenated vegetable oils, cocoa butter, degreased cocoa powder, glycerol monostearate, glyceryl triacetate, lecithin, mono-, di- and triglycerides, acetylated monoglycerides, fatty acids (e.g. stearic, palmitic, oleic and linoleic acids) and combinations thereof. As used herein the term "softener" designates an ingredient, which softens the gum base or chewing gum formulation and encompasses waxes, fats, oils, emulsifiers, surfactants and solubilisers.

To soften the gum base further and to provide it with water-binding properties, which confer to the gum base a pleasant smooth surface and reduce its adhesive properties, one or more emulsifiers is/are usually added to the composition, typically in an amount of 0 to 18% by weight, preferably 0 to 12% by weight of the gum base. Mono- and diglycerides of edible fatty acids, lactic acid esters and acetic acid esters of mono- and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes and fats are conventionally used for the adjustment of the consistency and for softening of the chewing gum base when preparing chewing gum bases. In connection with the present invention, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

In an embodiment of the invention, the chewing gum comprises filler.

A chewing gum base formulation may, if desired, include one or more fillers/texturisers including as examples, magnesium and calcium carbonate, sodium sulphate, ground limestone, silicate compounds such as magnesium and aluminum silicate, kaolin and clay, aluminum oxide, silicium oxide, talc, titanium oxide, mono-, di- and tri-calcium phosphates, cellulose polymers, such as wood, and combinations thereof.

In an embodiment of the invention, the chewing gum comprises filler in an amount of about 0 to about 50% by weight of the chewing gum, more typically about 10 to about 40% by weight of the chewing gum.

In addition to a water insoluble gum base portion, a typical chewing gum includes a water soluble bulk portion and one or more flavoring agents. The water-soluble portion may include bulk sweeteners, high intensity sweeteners, flavoring agents, softeners, emulsifiers, colors, acidulants, fillers, antioxidants, and other components that provide desired attributes.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from about 0 to about 8 % by weight, preferably 0.001 to about 5 % by weight. When carriers used for encapsulation are included, the usage level of the encapsulated sweetener will be proportionately higher.

Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile.

Further chewing gum ingredients, which may be included in the chewing gum according to the present invention, include surfactants and/or solubilisers, especially when pharmaceutically or biologically active ingredients are present. As examples of types of surfactants to be used as solubilisers in a chewing gum composition according to the invention, reference is made to H.P. Fiedler, Lexikon der Hilfstoffe für Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lechithin, mono-, di-and triglycerides, acetylated monoglycerides, fatty acids (e.g. stearic, palmitic, oleic and linoleic acids), and combinations thereof.

According to an embodiment of the invention, the chewing gum may comprise a pharmaceutically, cosmetically or biologically active substance. Examples of such active substances, a comprehensive list of which is found e.g. in WO 00/25598, which is incorporated herein by reference,

The active agents to be used in connection with the present invention may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingredients include paracetamol, benzocaine, cinnarizine, menthol, carvone, coffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammonium compounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folic acid, niacine, biotine, poorly soluble glycerophosphates, amino acids, the vitamins A, D, E and K, minerals in the form of salts, complexes and compounds containing calcium, phosphorus, magnesium, iron; zinc, copper, iodine, manganese, chromium, selenium, molybdenum, potassium, sodium or cobalt.

Furthermore, reference is made to lists of nutritients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AlK (S0₄) 2, 12H₂0) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodium monofluoro phosphate, amino fluorides, stannous fluoride), phosphates, carbonates and selenium.

Cf. furthermore J. Dent. Res. Vol. 28 No. 2, page 160-171,1949, wherein a wide range of tested compounds are mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase, glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B 12, Folic acid, niacin, Pantothensyre, biotine, C, D, E, K.

Minerals include Calcium, phosphor, magnesium, iron, Zink, Cupper, lod, Mangan, Crom, Selene, Molybden. Other active ingredients include: Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Active ingredients may comprise the below-mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon, Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

In one embodiment of the invention, the flavor may be used as taste masking in chewing gum comprising active ingredients, which by themselves have undesired taste or which alter the taste of the formulation.

The chewing gum may optionally contain usual additives, such as binding agents, acidulants, fillers, coloring agents, preservatives, and antioxidants, for instance butylated hydroxytoluene (BHT), butyl hydroxyanisol (BHA), propylgallate and tocopherols.

Colorants and whiteners may include FD & C-type dyes and lakes, fruit and vegetable extracts, titanium dioxide, and combinations thereof.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Generally, it is preferred that the chewing gum and the gum bases prepared according to the invention are based solely on biodegradable polymers.

However, within the scope of the invention, minor amounts of conventional synthetic chewing gum elastomers or elastomer plasticizers, examples of which are mentioned below, may be applied.

Examples of such generally non-biodegradable synthetic resins include polyvinyl acetate, vinyl acetate-vinyl laurate copolymers and mixtures thereof. Examples of non-biodegradable synthetic elastomers include, but are not limited to, synthetic elastomers listed in Food and Drug Administration, CFR, Title 21, Section 172,615, the Masticatory Substances, Synthetic) such as polyisobutylene. e.g. having a gel permeation chromatography (GPC) average molecular weight in the range of about 10,000 to 1,000,000 including the range of 50,000 to 80,000, isobutylene-isoprene copolymer (butyl elastomer), styrene-butadiene copolymers e.g. having styrene-butadiene ratios of about 1:3 to 3:1, polyvinyl acetate (PVA), e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base, polyisoprene, polyethylene, vinyl acetate-vinyl laurate copolymer e.g. having a vinyl laurate content of about 5 to 50% by weight such as 10 to 45% by weight of the copolymer, and combinations hereof.

It is common in the industry to combine in a gum base a synthetic elastomer having a high molecular weight and a synthetic elastomer having a low molecular weight. Examples of such combinations of are polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Examples of natural resins, which should preferably not be applied in the chewing gum according to the present invention are: Natural rosin esters, often referred to as ester gums including as examples glycerol esters of partially hydrogenated rosins, glycerol esters of polymerised rosins, glycerol esters of partially dimerized rosins, glycerol esters of tally oil rosins, pentaerythritol esters of partially hydrogenated rosins, methyl esters of rosins, partially hydrogenated methyl esters of rosins, pentaerythritol esters of rosins, synthetic resins such as terpene resins derived from alpha-pinene, beta-pinene, and/or d-limonene, and natural terpene resins.

In general, chewing gum may be manufactured by sequentially adding the various chewing gum ingredients to a commercially available mixer known in the art. After the initial ingredients have been thoroughly mixed, the chewing gum mass is discharged from the mixer and shaped into the desired form such as by rolling into sheets and cutting into sticks, extruded into chunks or casting into pellets.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor has been added.

The entire mixing procedure typically takes from five to fifteen minutes, but longer mixing times may sometimes be required. Those skilled in the art will recognize that many variations of the above described procedure may be followed. Including the one-step method described in US patent application 2004/0115305 hereby incorporated as reference. Chewing gums are formed by extrusion, compression, rolling and may be centre filled with liquids and/or solids in any form.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugar free soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

The gum centre of coated chewing gum element according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere, and typically the weight of a gum center may be 0.5 to 5 grams.

The following non-limiting examples illustrate the manufacturing of a chewing gum according to the invention.

### EXAMPLE 1

### Preparation of biodegradable resinous polymer with molar ratio of 97% D,L-lactide and 3% ε-caprolactone initiated with 1,2-propane diol

To a dry 100 ml glass round-bottom flask was charged 0.265g Tin(II)-ethylhexanoate (Aldrich 97%), 6.427g 1,2-propanediol (Aldrich 99+%), and 18.627g ε-caprolactone (ACROS 99+%) in a dry, nitrogen purged glove-box. The reactor was immersed into a 130°C preheated silicone oil bath and mechanically stirred for 65 minutes and removed from the oil bath. The polymer was drawn into a dry syringe while still hot and 22.172g was charged into a dry 1000 ml round-bottom flask containing 678.062g D,L-lactide (ORTEC). The flask was immersed into the 130°C preheated silicone oil bath and mechanically stirred for 300 minutes when removed. The flask was immediately removed from the glove-box and completely wrapped with a pre-heated Glas-Col 500 watts/115 volts heating mantle regulated with a Staco Energy Products Type 3 Variable Autotransformer set at 65% of 0-120V output. The heated vessel was inverted allowing the final polymer product to fully discharge from the reactor within approximately 2 minutes into a dry 1-quart metal packaging container. Characterization of the polymer indicates Tg = 44°C (DSC, heating rate 10°C/min), Mₙ = 11,650 g/mol, and M_{w} = 12,420 g/mol (gel permeation chromatography with online MALLS detector). PD = 1.07.

### EXAMPLE 2

### Preparation of biodegradable resinous polymer with molar ratio of 96.5% D,L-lactide and 3.5% ε-caprolactone initiated with 1,2-propane diol

To a dry 100 ml glass round-bottom flask was charged 0.252g Tin(II)-ethylhexanoate (Aldrich 97%), 3.198g 1,2-propanediol (Aldrich 99+%), and 23.366g ε-caprolactone (ACROS 99+%) in a dry, nitrogen purged glove-box. The reactor was immersed into a 130°C preheated silicone oil bath and mechanically stirred for 65 minutes and removed from the oil bath. The polymer was drawn into a dry syringe while still hot and 22.344g was charged into a dry 1000 ml round-bottom flask containing 677.871 g D,L-lactide (ORTEC). The flask was immersed into the 130°C preheated silicone oil bath and mechanically stirred for 320 minutes when removed. The flask was immediately removed from the glove-box and completely wrapped with a pre-heated Glas-Col 500 watts/115 volts heating mantle regulated with a Staco Energy Products Type 3 Variable Autotransformer set at 65% of 0-120V output. The heated vessel was inverted allowing the final polymer product to fully discharge from the reactor within approximately 2 minutes into a dry 1-quart metal packaging container. Characterization of the polymer indicates Tg = 41°C (DSC, heating rate 10°C/min), Mn = 20,350 g/mol, and Mw = 23,480 g/mol (gel permeation chromatography with online MALLS detector). PD = 1.15.

### EXAMPLE 3

### Biodegradable resinous polymer with lower Tg

A polymerization similar to example 1 was performed to prepare a biodegradable resinous polymer with molar ratio of 91.5% D,L-lactide and 8.5% ε-caprolactone. Characterization of the polymer indicates Tg = 31 °C (DSC, heating rate 10°C/min), Mn = 6500 g/mol, and Mw = 7600 g/mol.

### EXAMPLE 4

### Biodegradable elastomeric polymer

An elastomer sample is produced using a 500 mL resin kettle equipped with an overhead stirrer, nitrogen gas inlet tube, thermometer, and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200°C until the evolution of methanol ceases. Heating is discontinued and the content is allowed to cool to about 100°C. The reactor lid is removed and the molten polymer is carefully poured into a receiving vessel.

Characterization of the polymer indicates Tg = -30°C (DSC, heating rate 10°C/min), Mn = 40,000g/mol and Mw = 190,000g/mol (gel permeation chromatography with online MALLS detector).

### EXAMPLE 5

### Preparation of gum bases and chewing gums

Three different gum bases were prepared from the above polymers of examples 1 to 4 by combining the elastomeric polymer of ex. 4 with three different resinous polymers as outlined in table 1:

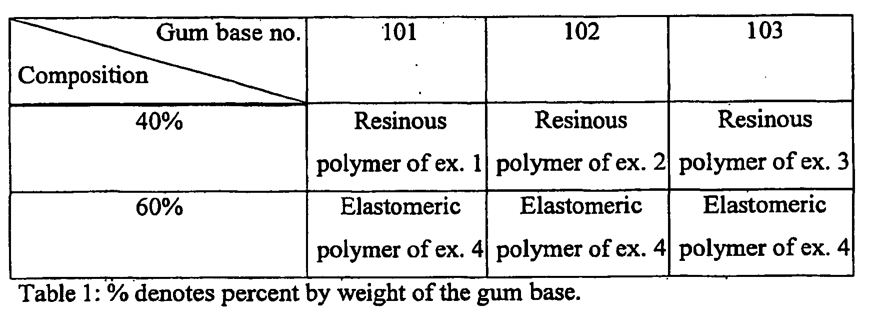

The gum bases are prepared as follows:

The elastomeric polymer and resinous polymer are added to a mixing kettle provided with mixing means like e.g. horizontally placed Z-shaped arms. The kettle has been preheated for 15 minutes to a temperature of about 60-80°C. The mixture is mixed for 10-20 minutes until the whole mixture becomes homogeneous. The mixture is then discharged into the pan and allowed to cool to room temperature from the discharged temperature of 60-80°C.

Based on the Tg's of the resinous components, gum bases no. 101 and 102 are in the present text considered as high-Tg-biodegradable gum bases as compared to gum base no. 103. In gum base no. 103, the resinous component has a Tg of about 31°C, which is below mouth temperature, while in gum base no. 101 and 102, the resinous components have Tg's of 44 °C and 41 °C, which are above normal mouth temperature.

The gum bases no. 101, 102, and 103 are used in chewing gum no. 1001, 1002, and 1003 respectively. The chewing gum formulation is shown in table 2:

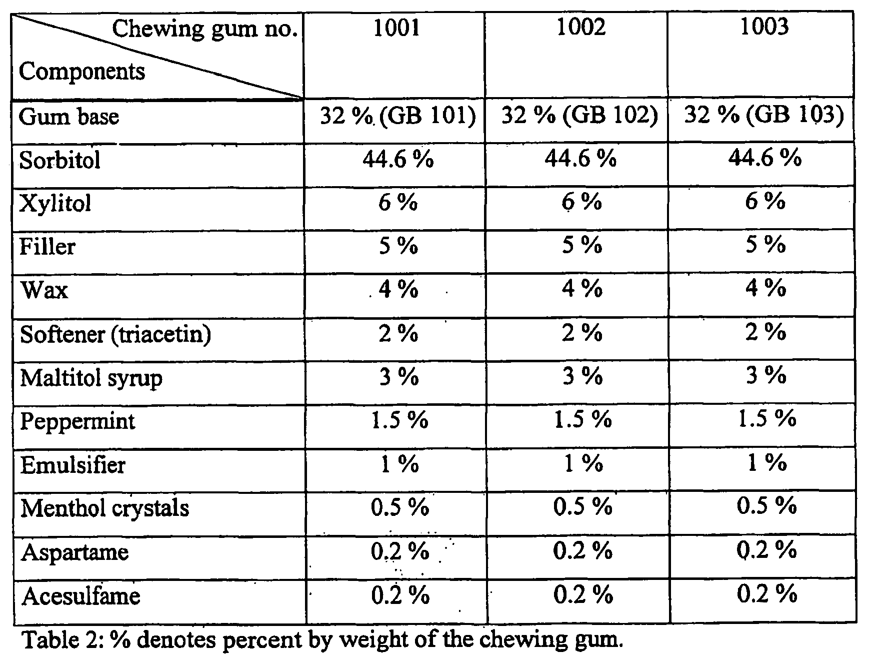

All the chewing gums are prepared with the same overall composition, wherein only the type of resinous component (the polymers of ex. 1, 2, and 3, respectively) in the gum base is varied. The softeners, emulsifiers and fillers may alternatively be added to the polymers as a part of the gum base preparation.

The chewing gum products are prepared as follows:

The gum base is added to a mixing kettle provided with mixing means like e.g. horizontally placed Z-shaped arms. The kettle has been preheated for 15 minutes to a temperature of about 40-60°C or the chewing gum is made in one step, immediately after preparation of gum base in the same mixer where the gum base and kettle has a temperature of about 60-80°C.

One half portion of the sorbitol is added together with the gum base and mixed for 3 minutes. Peppermint and menthol are then added to the kettle and mixed for 1 minute. The remaining half portion of sorbitol is added and mixed for 1 minute. Maltitol syrup is added, and then wax and filler may be added and the gum mass is mixed well. Softeners are slowly added and mixed for 7 minutes. Then aspartame and acesulfame are added to the kettle and mixed for 3 minutes. Xylitol is added and mixed for 3 minutes. The resulting gum mixture is then discharged and e.g. transferred to a pan at a temperature of 40-48 °C. The gum is then rolled and scored into cores, sticks, balls, cubes, and any other desired shape, optionally followed by coating and polishing processes prior to packaging.

Evidently, within the scope of the invention, other processes and ingredients may be applied in the process of manufacturing the chewing gum.

### EXAMPLE 6

### Evaluation of chewing gums comprising biodegradable polymers of high Tg's - and the effect of regulating the molecular weight

Samples of chewing gum no. 1001 and 1002 were tested by some individual test persons, whereby the following evaluation was obtained:

**Table 3: Evaluation chewing gums comprising biodegradable polymers of high Tg's.**

| Chewing gum samples no. | Evaluation of texture |
|---|---|
| 1001 | The texture was generally deemed all right, although it seemed a bit harder than conventional chewing gum. |
| 1002 | The texture was less elastic than 1001, and it was more hard and had a tendency to disintegrate. Generally the texture was not quite all right, as it needed a little more softness and coherence. Improved texture may be obtained by further or alternative softening. |

It has been found that an acceptable chewing gum texture may be obtained by the use of high-Tg-polymers as the compound providing the resinous contribution to the chewing gum.

In the present evaluation, the samples of 1001 are judged to be the best alternative, even though the Tg of the resinous biodegradable polymer in 1001 is a few degrees higher than the corresponding of 1002. If any difference between the two samples due to Tg, it would be expected that the Tg of the resinous polymer would affect 1001 to have the hardest texture. As the opposite situation is observed, the explanation of the texture may be interpreted to be due to the difference in molecular weight of the resinous biodegradable polymers of 1001 and 1002, respectively. The molecular weight of the resinous polymer of 1002 is somewhat higher than of 1001, and the texture of the final chewing gum no. 1002 is somewhat harder than of 1001. Hence, it is learned that the molecular weight may have a considerable impact on the performance of such biodegradable polymers of higher Tg in a chewing gum.

The chewing gum formulation of 1002 should be adjusted in order to achieve a fully acceptable texture of the chewing gum comprising a resinous biodegradable polymer featuring both a relatively high Tg and molecular weight. A way to adjust the present formulation could for example be a slight lowering of the amount of resinous biodegradable polymer or a slight increase in the amount of softener.

### EXAMPLE 7

### Evaluation of chewing gums

The chewing gum no. 1001 (comprising biodegradable polymer of Tg 44°C and Mn 11650 g/mol) was then compared to the low-Tg chewing gum no. 1003 (comprising a biodegradable polymer of Tg 31°C and Mn 6500)

Samples of 1001 and 1003 were evaluated throughout at chewing period of 7 minutes and involving an evaluation of the initial phases A and B (A: 0-1 min. and B: 1-2 min.), the intermediate phase (4-5 min.), and the end phase (6-7 min.) of the chewing period. The evaluation involved the following parameters: flavor, cooling, sweetness, elasticity, volume, and softness. The chewing gum samples were tested by serving them to 21 sensory panelists in tasting booths made in accordance with ISO 8598 standards at room temperature in small tasteless plastic cups with randomized 3-figure codes. For each of the parameters tested, the panelists were required to provide their assessments according to an arbitrary scale of 0-15, with 0 being the lowest rating and 15 being the highest rating. Between each sample tested, the panelists were allowed a break of 3 minutes.

The approx. average ratings are shown in table 4:

Generally, the above evaluation reveals surprising results for the samples of chewing gum no. 1001. It was surprising, that the polymer with a Tg of 44°C, which is well above human body temperature, were actually fully applicable in chewing gums. In particular, it is a remarkable, that the properties of chewing gum no. 1001 were basically on the same level as chewing gum no. 1003 regardless of the different Tg's. The experiment discloses that a biodegradable polymer of high Tg, contrary to the expectations within the art, may be used in a chewing gum in a rather large amount, without compromising the texture considerably.

The above table 4 summarizes by average numbers the evaluation given by the sensory panel. However, based on the assertions made by the 21 sensory panelists it was furthermore evaluated, on which parameters small differences were significant

In table 5 the evaluation results are represented by five different levels:
2 designates that 1001 is significantly improved with respect to 1003.
1 designates that indications of differences in favor of the 1001 samples compared to 1003 samples was observed.
0 designates that there was found no considerable difference between 1001 and 1003,
-1 designates that 1001 shows indications of difference is observed, and that the indication of difference the properties of 1001 was not as good as 1003.
-2 designates that there is a significant difference between 1001 and 1003 in favor of 1003.

**Table 5: Mapping of the differences and similarities between chewing gum no. 1001 and 1003 comprising biodegradable polymers having Tg's (in °C) of 44 and 31, respectively.**

| **Parameter** | **Initial phase 1-2** | **Intermediate phase** | **End phase** |
|---|---|---|---|
| | Samples of 1001 vs. 1003 | Samples of 1001 vs. 1003 | Samples of 1001 vs. 1003 |
| Flavor | 0 | -2 | -1 |
| Cooling | -1 | 0 | 1 |
| Sweetness | 0 | -2 | -2 |
| Elasticity | 0 | 0 | 1 |
| Volume | -1 | 0 | 0 |
| Softness | -2 | -2 | -2 |

Only the softness was in all chewing gum phases judged to be significantly inferior in 1001 compared to 1003. The level of sweetness was equal between the two chewing gum types in the initial phase, but in the intermediate and end phase, 1001 was apparently loosing sweetness sooner than 1003. With regard to the rest of the parameters, flavor, cooling, elasticity, and volume, it is noteworthy, that the general picture was that the eventual differences weren't significant.

It is understood from the experiments, that a biodegradable polyester featuring a Tg well above mouth temperature, may be fully applicable as a resinous compound in a chewing gum. Actually, based on the experiments, it is believed that the strength of such a resinous biodegradable polymer is increased by an increase in the Tg. In other words, the function as a resinous compound in chewing gum may be augmented and in some formulations improved by a higher Tg. Thus, a biodegradable polymer having a Tg above mouth temperature is found to have great properties as elastomer plasticizer, ie. elastomer solvent in chewing gum.

It should furthermore be noted, that it is possible to avoid natural resins and natural rubber, by the application of a resinous biodegradable polymer according to the invention instead.

### EXAMPLE 8

### Biodegradable resinous homo-polymer with a high Tg

A polymerization similar to example 1 was performed to prepare a biodegradable resinous polymer polymerized from only one monomer type, D,L-lactide to make a 100%-lactide-based polymer.

Characterization of the polymer indicates Tg about 40-45°C (DSC, heating rate 10°C/min), Mn = 6,800g/mol and Mw = 7,400g/mol (gel permeation chromatography with online MALLS detector).

It is acknowledged that this polymer is also applicable as a resinous compound in a chewing gum formulation corresponding to example 5. the chewing gum is chewable without further softening, and the chewing gum texture may be adjusted by altering the molecular weight of the lactide-polymer to be rather low compared to resinous biodegradable polymers of a lower Tg such as 31°C.

### EXAMPLE 9

A homopolymer by NatureWorks^{®} PLA 4060 D (amorph) poly D,L-lactide was provided as a resin. The homopolymer has a Tg of about 56°C. ( Mn ∼ 100,000)

### EXAMPLE 10

A homopolymer by NatureWorks^{®} PLA 5500 D (amorph) poly D,L-lactide was provided as a resin. The homopolymer has a Tg of about 50°C (Mn ∼ 50,000)

### EXAMPLE 11

### Preparation of gum bases

The process of preparing gum bases is carried out in the following way: The gum base components are added to a mixing kettle provided with mixing means like e.g. horizontally placed Z-shaped arms. The kettle has been preheated to a temperature of about 140°C. The mixture is mixed for 30-120 minutes until the whole mixture becomes homogeneous. The mixture is then discharged into the pan and allowed to cool to room temperature.

Three different gum bases as shown in table 6 were prepared.

**Table 6: Gum base compositions, components designated by % by weight.**

| Gum base components | Comparative base 104 | Gum base 105 | Gum base 106 |
|---|---|---|---|
| Conventional elastomer | 15 | | |
| Polyester elastomer of Example 4 | | 15 | 15 |
| Conventional Resin | 20 | | |
| Conventional synthetic resin | 20 | | |
| Polyester of Example 9 | | 40 | |
| Polyester of Example 10 | | | 40 |
| Filler | 20 | 20 | 20 |
| Emulsifier | 5 | 5 | 5 |
| Fat | 20 | 20 | 20 |

### EXAMPLE 12

### Preparation of chewing gum

The gum bases of example 11 were used in the preparation of peppermint flavored chewing gum formulations 1004 to 1006 with the basic formulations shown in table 7 and where gum base 104 is applied for the preparation of chewing gum 1004, gum base 105 is applied for the preparation of chewing gum 1005 and so forth.

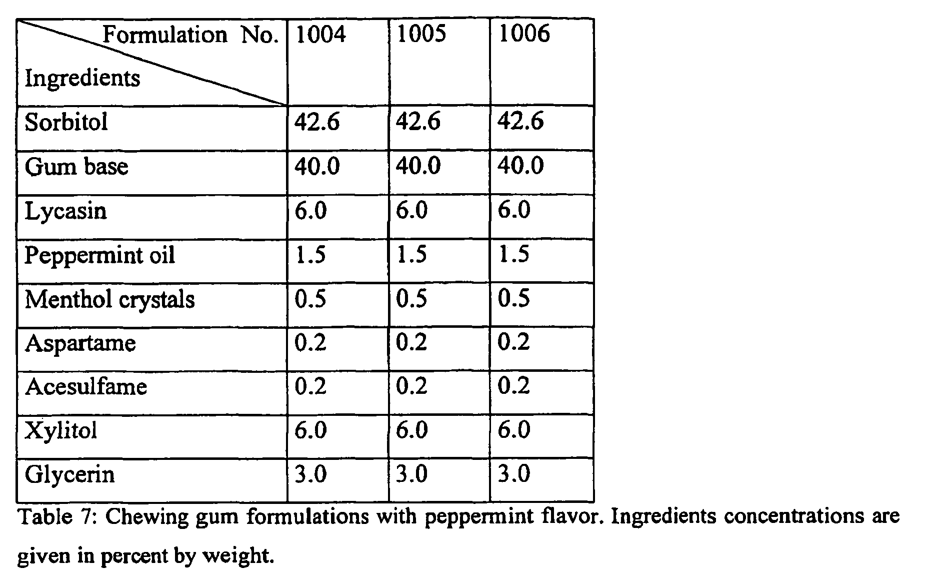

The softeners, emulsifiers and fillers may alternatively be added to the polymers as a part of the gum base preparation.

### EXAMPLE 13:

Evaluation of the chewing gum of table 7.

The texture of the chewing gums of table 7 was evaluated.

It was generally observed that the texture was well compensated by the modified softening system and that the texture of 1005 and 1006 were acceptable and comparable to 1004.

## Claims

1. Chewing gum comprising at least one biodegradable polymer in an amount of from 0.1 % to 95 %, said biodegradable polymer having a glass transition temperature (Tg) above 40°C, wherein said chewing gum comprising said at least one biodegradable polymer further comprises at least one elastomeric compounds, and wherein said biodegradable polymer has a plasticizing effect on said elastomeric compound.

2. Chewing gum according to claims 1, wherein said chewing gum comprises said at least one biodegradable polymer in an amount of from about 2 to 60 % by weight.

3. Chewing gum according to claim 1 or 2, wherein said chewing gum is substantially free of natural resins.

4. Chewing gum according to any of the claims 1-3, wherein said chewing gum comprises said biodegradable polymer in an amount in the range of 2 to 50 %.

5. Chewing gum according to any of the claims 1-4, wherein said chewing gum comprises said biodegradable polymer in an amount in the range of 5 to 40 %, preferably in the range of 10 to 30 %.

6. Chewing gum according to any of the claims 1-5, wherein said chewing gum comprises said biodegradable polymer in an amount in the range of 5 to 25 %.

7. Chewing gum according to any of the claims 1-6, wherein said biodegradable polymer has a glass transition temperature (Tg) in the range of 40 °C to 90 °C.

8. Chewing gum according to any of the claims 1-7, wherein said biodegradable polymer has a glass transition temperature in the range of 41°C to 75 °C.

9. Chewing gum according to any of the claims 1-8, wherein said biodegradable polymer has a glass transition temperature in the range of 42 °C to 65 °C.

10. Chewing gum according to any of the claims 1-9, wherein said biodegradable polymer has a glass transition temperature in the range of 43 °C to 48 °C

11. Chewing gum according to any of the claims 1-10, wherein said chewing gum comprises less than approximately 5% by weight of natural resins, preferably less than 3% by weight and most preferably less than about 2% by weight of said chewing gum.

12. Chewing gum according to any of the claims 1-11, wherein said biodegradable polymer has a molecular weight (Mn) in the range of 500 to 22000 g/mol, preferably in the range of 500 to 15000 g/mol.

13. Chewing gum according to any of the claims 1-12, wherein said biodegradable polymer is a polyester.

14. Chewing gum according to any of the claims 1-13, wherein said biodegradable polyester polymer is obtainable by ring-opening polymerization of cyclic monomers.

15. Chewing gum according to any of the claims 1-14, wherein said cyclic monomers are selected from the group of cyclic esters and cyclic carbonates.

16. Chewing gum according to any of the claims 1-15, wherein said cyclic monomers are selected from the group of D,L-lactide, L-lactide, glycolide, ε-caprolactone, δ-valerolactone, trimethylene carbonate (TMC) and dioxanone.

17. Chewing gum according to any of the claims 1-16, wherein at least one of said cyclic monomers is a high-Tg-inducing monomer.

18. Chewing gum according to any of the claims 1-17, wherein said polyester is a polymer obtainable by the polymerization of one single type of high-Tg-inducing monomers.

19. Chewing gum according to any of the claims 1-18, wherein said polyester is a copolymer obtainable by the polymerization of at least two different high-Tg-inducing monomers.

20. Chewing gum according to any of the claims 1-19, wherein said polyester is a copolymer obtainable by the polymerization of at least one low-Tg-inducing monomer with at least one high-Tg-inducing monomer.

21. Chewing gum according to any of the claims 1-20, wherein the molar ratio of the at least one high-Tg-inducing monomer to the at least one low-Tg-inducing monomer is in the range of 75/25 to 99/1, preferably in the range of 85/15 to 99/1.

22. Chewing gum according to any of the claims 1-21, wherein the molar ratio of the at least one high-T_{g}-inducing monomer to the at least one low-Tg-inducing monomer is in the range of 90/10 to 99/1, preferably in the range of 95/5 to 99/1.

23. Chewing gum according to any of the claims 1-22, wherein the molar ratio of the at least one high-T_{g}-inducing monomer to the at least one low-Tg-inducing monomer is in the range of 95/5 to 98/2.

24. Chewing gum according to any of the claims 1-23, wherein said at least one high-Tg-inducing monomer is selected from the group of monomers comprising D,L-lactide, L-lactide and glycolide.

25. Chewing gum according to any of the claims 1-24, wherein said at least one low-Tg-inducing monomer is selected from the group of monomers comprising ε-caprolactone, δ-valerolactone, trimethylene carbonate (TMC) and dioxanone.

26. Chewing gum according to any of the claims 1-25, wherein said ring-opening polymerization is initiated by one or more initiators.

27. Chewing gum according to any of the claims 1-26, wherein said initiators comprise about 0.01 to 1.0 % by weight of said biodegradable polyester polymer.

28. Chewing gum according to any of the claims 1-27, wherein at least 50 mol %, preferably at least 70 mol % of said initiators are difunctional.

29. Chewing gum according to any of the claims 1-28, wherein said polyester polymer is substantially linear.

30. Chewing gum according to any of the claims 1-29, wherein said substantially linear polyester polymer comprises above 50 percent linear polymer chains.

31. Chewing gum according to any of the claims 1-30, wherein said substantially linear polyester polymer comprises above 70 percent linear polymer chains.

32. Chewing gum according to any of the claims 1-31, wherein said substantially linear polyester polymer comprises above 80 percent linear polymer chains.

33. Chewing gum according to any of the claims 1-32, wherein said biodegradable polyester polymer is obtainable by condensation polymerization of polyfunctional acids or derivatives thereof and/or polyfunctional alcohols or derivatives thereof.

34. Chewing gum according to any of the claims 1-33, wherein said polyfunctional acids are selected from the group of lactic acids and glycolic acids.

35. Chewing gum according to any of the claims 1-34, wherein said polyfunctional acids are polyhydroxycarboxylic acids or hydroxycarboxylic acids.

36. Chewing gum according to any of the claims 1-35, wherein said chewing gum comprises an elastomeric compound in an amount of at least 5 %, preferably at least 10 % by weight of the chewing gum.

37. Chewing gum according to any of the claims 1-36, wherein said at least one elastomeric compound is a biodegradable elastomer.

38. Chewing gum according to any of the claims 1-37, wherein said biodegradable elastomer is obtainable by the polymerization of at least one alcohol or derivative thereof and at least one carboxylic acid or derivative thereof.

39. Chewing gum according to any of the claims 1-38, wherein the water content is less than 3 %, preferably less than 1.5 %, and most preferably less than 1 % by weight of the chewing gum.

40. Chewing gum according to any of the claims 1-39, wherein said chewing gum comprises one or more chewing gum ingredients selected from the group comprising flavoring agents, sweetening agents, fillers, softeners, emulsifiers, and active ingredients.

41. Chewing gum according to any of the claims 1- 40, wherein said flavoring agents comprise natural and synthetic flavorings in the form of natural vegetable components, essential oils, essences, extracts, powders, including acids and other substances capable of affecting the taste profile.

42. Chewing gum according to any of the claims 1-41, wherein said chewing gum comprises flavor in an amount of 0.01 to about 25 wt %, preferably in an amount of 0.1 to about 5 wt %, said percentage being based on the total weight of the chewing gum,

43. Chewing gum according to any of the claims 1- 42, wherein the chewing gum comprises at least one softener in an amount of about 0 to about 20 % by weight of the chewing gum, more typically about 0 to about 10 % by weight of the chewing gum.

44. Chewing gum according to any of the claims 1-43, wherein the amount of emulsifier is in the range of 0 to 18 % by weight of the chewing gum.

45. Chewing gum according to any of the claims 1-44, wherein said sweetening agents are selected from the group comprising bulk sweeteners, and high intensity sweeteners, and combinations thereof.

46. Chewing gum according to any of the claims 1-45, wherein the chewing gum comprises sugar.

47. Chewing gum according to any of the claims 1-45, wherein the chewing gum is sugar free.

48. Chewing gum according to any of the claims 1-47, wherein said bulk sweeteners comprises an amount of about 5 to about 95%, preferably about 20 to about 80% by weight of the chewing gum.

49. Chewing gum according to any of the claims 1-48, wherein the chewing gum comprises high intensity sweeteners in an amount of about 0 to about 1.2 %, preferably about 0.1 to about 0.6 % by weight of the chewing gum.

50. Chewing gum according to any of the claims 1-49, wherein the chewing gum comprises filler in an amount of about 0 to about 50% by weight of the chewing gum, more typically about 10 to about 40 % by weight of the chewing gum.

51. Chewing gum according to any of the claims 1-50, wherein the chewing gum comprises at least one coloring agent.

52. Chewing gum according to any of the claims 1- 51, wherein said chewing gum ingredients comprise active ingredients.

53. Chewing gum according to any of the claims 1-52, wherein said chewing gum is coated with an outer coating selected from the group comprising hard coating, soft coating and edible film-coating.

54. Chewing gum according to any of the claims 1-53, wherein the outer coating comprises at least one additive component selected from the group comprising a binding agent, a moisture absorbing component, a film forming agent, a dispersing agent, an antisticking component, a bulking agent, a flavoring agent, a coloring agent, a pharmaceutically or cosmetically active component, a lipid component, a wax component, a sugar, an acid and an agent capable of accelerating the after-chewing degradation of the degradable polymers.

55. Chewing gum according to any of the claims 1-54, wherein said biodegradable polymer has a molecular weight (Mn) in the range of 500 to 400,000 g/mol, preferably in the range of 500 to 200,000 g/mol (Mn).

56. Chewing gum according to any of the claims 1-55, wherein said biodegradable polymer has a molecular weight (Mn) in the range of 500 to 150,000 g/mol.

57. Chewing gum according to any of the claims 1-56, wherein said biodegradable polymer has a molecular weight (Mn) of less than about 60,000 g/mol.

58. Chewing gum according to any of the claims 1-57, wherein said chewing gum comprises an elastomeric compound in an amount of at least 0.5 %, preferably at least 1 % by weight of the chewing gum.

59. Chewing gum according to any of the claims 1-58, wherein said chewing gum comprises an elastomeric compound in an amount of at least 5 %, preferably at least 8 % by weight of the chewing gum.

60. Chewing gum according to any of the claims 1-59, wherein said chewing gum comprises an elastomeric compound in an amount within the range of about 1% to 40% by weight of the chewing gum.

## Patentansprüche

1. Kaugummi, welcher mindestens ein biologisch abbaubares Polymer in einer Menge von 0,1% bis 95% umfasst, wobei das biologisch abbaubare Polymer eine Glasübergangstemperatur (Tg) über 40°C aufweist, wobei der Kaugummi, der das mindestens eine biologisch abbaubare Polymer umfasst, des Weiteren mindestens eine elastomere Verbindung umfasst und wobei das biologisch abbaubare Polymer eine weichmachende Wirkung auf die elastomere Verbindung aufweist.

2. Kaugummi nach Anspruch 1, wobei der Kaugummi das mindestens eine biologisch abbaubare Polymer in einer Menge von etwa 2 bis 60 Gew.-% umfasst.

3. Kaugummi nach einem der Ansprüche 1 oder 2, wobei der Kaugummi im Wesentlichen frei von natürlichen Harzen ist.

4. Kaugummi nach einem der Ansprüche 1-3, wobei der Kaugummi das biologisch abbaubare Polymer in einer Menge im Bereich von 2 bis 50% umfasst.

5. Kaugummi nach einem der Ansprüche 1-4, wobei der Kaugummi das biologisch abbaubare Polymer in einer Menge im Bereich von 5 bis 40%, vorzugsweise im Bereich von 10 bis 30% umfasst.

6. Kaugummi nach einem der Ansprüche 1-5, wobei der Kaugummi das biologisch abbaubare Polymer in einer Menge im Bereich von 5 bis 25% umfasst.

7. Kaugummi nach einem der Ansprüche 1-6, wobei das biologisch abbaubare Polymer eine Glasübergangstemperatur (Tg) im Bereich von 40°C bis 90°C aufweist.

8. Kaugummi nach einem der Ansprüche 1-7, wobei das biologisch abbaubare Polymer eine Glasübergangstemperatur im Bereich von 41 °C bis 75°C aufweist.

9. Kaugummi nach einem der Ansprüche 1-8, wobei das biologisch abbaubare Polymer eine Glasübergangstemperatur im Bereich von 42°C bis 65°C aufweist.

10. Kaugummi nach einem der Ansprüche 1-9, wobei das biologisch abbaubare Polymer eine Glasübergangstemperatur im Bereich von 43°C bis 48°C aufweist.

11. Kaugummi nach einem der Ansprüche 1-10, wobei der Kaugummi weniger als ungefähr 5 Gew.-% natürliche Harze, vorzugsweise weniger als 3 Gew.-% und am meisten bevorzugt weniger als etwa 2 Gew.-% bezogen auf den Kaugummi umfasst.

12. Kaugummi nach einem der Ansprüche 1-11, wobei das biologisch abbaubare Polymer ein Zahlenmittel des Molekulargewichts (Mn) im Bereich von 500 bis 22000 g/mol, vorzugsweise im Bereich von 500 bis 15000 g/mol aufweist.

13. Kaugummi nach einem der Ansprüche 1-12, wobei das biologisch abbaubare Polymer ein Polyester ist.

14. Kaugummi nach einem der Ansprüche 1-13, wobei das biologisch abbaubare Polyesterpolymer durch Ringöffnungspolymerisation von cyclischen Monomeren erhältlich ist.

15. Kaugummi nach einem der Ansprüche 1-14, wobei die cyclischen Monomere aus der Gruppe von cyclischen Estern und cyclischen Carbonaten ausgewählt sind.

16. Kaugummi nach einem der Ansprüche 1-15, wobei die cyclischen Monomere aus der Gruppe von D,L-Lactid, L-Lactid, Glycolid, ε-Caprolacton, δ-Valerolacton, Trimethylencarbonat (TMC) und Dioxanon ausgewählt sind.

17. Kaugummi nach einem der Ansprüche 1-16, wobei mindestens eines der cyclischen Monomere ein Monomer, welches eine hohe Tg induziert, ist.

18. Kaugummi nach einem der Ansprüche 1-17, wobei der Polyester ein Polymer ist, das durch die Polymerisation eines einzelnen Typs von Monomeren, die eine hohe Tg induzieren, erhältlich ist.

19. Kaugummi nach einem der Ansprüche 1-18, wobei der Polyester ein Copolymer ist, das durch die Polymerisation von mindestens zwei unterschiedlichen Monomeren, die eine hohe Tg induzieren, erhältlich ist.

20. Kaugummi nach einem der Ansprüche 1-19, wobei der Polyester ein Copolymer ist, das durch die Polymerisation mindestens eines Monomers, das eine niedrige Tg induziert, mit mindestens einem Monomer, das eine hohe Tg induziert, erhältlich ist.

21. Kaugummi nach einem der Ansprüche 1-20, wobei das Molverhältnis des mindestens einen Monomers, das eine hohe Tg induziert, zu dem mindestens einen Monomer, das eine niedrige Tg induziert, im Bereich von 75/25 bis 99/1, vorzugsweise im Bereich von 85/15 bis 99/1 liegt.

22. Kaugummi nach einem der Ansprüche 1-21, wobei das Molverhältnis des mindestens einen Monomers, das eine hohe T_{g} induziert, zu dem mindestens einen Monomer, das eine niedrige T_{g} induziert, im Bereich von 90/10 bis 99/1, vorzugsweise im Bereich von 95/5 bis 99/1 liegt.

23. Kaugummi nach einem der Ansprüche 1-22, wobei das Molverhältnis des mindestens einen Monomers, das eine hohe T_{g} induziert, zu dem mindestens einen Monomer, das eine niedrige T_{g} induziert, im Bereich von 95/5 bis 98/2 liegt.

24. Kaugummi nach einem der Ansprüche 1-23, wobei das mindestens eine Monomer, das eine hohe Tg induziert, aus der Gruppe von Monomeren, welche D,L-Lactid, L-Lactid und Glycolid umfasst, ausgewählt ist.

25. Kaugummi nach einem der Ansprüche 1-24, wobei das mindestens eine Monomer, das eine niedrige Tg induziert, aus der Gruppe von Monomeren, welche ε-Caprolacton, δ-Valerolacton, Trimethylencarbonat (TMC) und Dioxanon umfasst, ausgewählt ist.

26. Kaugummi nach einem der Ansprüche 1-25, wobei die Ringöffnungspolymerisation durch einen oder mehrere Starter initiiert wird.

27. Kaugummi nach einem der Ansprüche 1-26, wobei die Starter etwa 0,01 bis 1,0%, bezogen auf das Gewicht des biologisch abbaubaren Polyesterpolymers, umfassen.

28. Kaugummi nach einem der Ansprüche 1-27, wobei mindestens 50 mol-%, vorzugsweise mindestens 70 mol-% der Starter bifunktionell sind.

29. Kaugummi nach einem der Ansprüche 1-28, wobei das Polyesterpolymer im Wesentlichen linear ist.

30. Kaugummi nach einem der Ansprüche 1-29, wobei das im Wesentlichen lineare Polyesterpolymer über 50 Prozent lineare Polymerketten umfasst.

31. Kaugummi nach einem der Ansprüche 1-30, wobei das im Wesentlichen lineare Polyesterpolymer über 70 Prozent lineare Polymerketten umfasst.

32. Kaugummi nach einem der Ansprüche 1-31, wobei das im Wesentlichen lineare Polyesterpolymer über 80 Prozent lineare Polymerketten umfasst.

33. Kaugummi nach einem der Ansprüche 1-32, wobei das biologisch abbaubare Polyesterpolymer durch Kondensationspolymerisation von polyfunktionellen Säuren oder Derivaten davon und/oder polyfunktionellen Alkoholen oder Derivaten davon erhältlich ist.

34. Kaugummi nach einem der Ansprüche 1-33, wobei die polyfunktionellen Säuren aus der Gruppe von Milchsäuren und Glycolsäuren ausgewählt sind.

35. Kaugummi nach einem der Ansprüche 1-34, wobei die polyfunktionellen Säuren Polyhydroxycarbonsäuren oder Hydroxycarbonsäuren sind.

36. Kaugummi nach einem der Ansprüche 1-35, wobei der Kaugummi eine elastomere Verbindung in einer Menge von mindestens 5%, vorzugsweise mindestens 10%, bezogen auf das Gewicht des Kaugummis, umfasst.

37. Kaugummi nach einem der Ansprüche 1-36, wobei die mindestens eine elastomere Verbindung ein biologisch abbaubares Elastomer ist.

38. Kaugummi nach einem der Ansprüche 1-37, wobei das biologisch abbaubare Elastomer durch die Polymerisation von mindestens einem Alkohol oder Derivat davon und mindestens einer Carbonsäure oder einem Derivat davon erhältlich ist.

39. Kaugummi nach einem der Ansprüche 1-38, wobei der Wassergehalt geringer als 3%, vorzugsweise geringer als 1,5% und am meisten bevorzugt geringer als 1 %, bezogen auf das Gewicht des Kaugummis, ist.

40. Kaugummi nach einem der Ansprüche 1-39, wobei der Kaugummi einen oder mehrere Kaugummibestandteile, die aus der Gruppe umfassend Geschmacks- und Aromastoffe, Süßungsmittel, Füllstoffe, Weichmacher, Emulgiermittel und Wirkstoffe ausgewählt sind, umfasst.

41. Kaugummi nach einem der Ansprüche 1-40, wobei die Geschmacks- und Aromastoffe natürliche und synthetische Geschmacks- und Aromastoffe in Form von natürlichen pflanzlichen Bestandteilen, ätherischen Ölen, Essenzen, Extrakten, Pulvern, einschließlich Säuren und anderen Substanzen, die in der Lage sind, das Geschmacksprofil zu beeinflussen, umfassen.

42. Kaugummi nach einem der Ansprüche 1-41, wobei der Kaugummi Geschmacks- oder Aromastoff in einer Menge von 0,01 bis etwa 25 Gew.-%, vorzugsweise in einer Menge von 0,1 bis etwa 5 Gew.-% umfasst, wobei der Prozentsatz auf dem Gesamtgewicht des Kaugummis basiert.

43. Kaugummi nach einem der Ansprüche 1-42, wobei der Kaugummi mindestens einen Weichmacher in einer Menge von etwa 0 bis etwa 20 Gew.-% des Kaugummis, in typischerer Weise etwa 0 bis etwa 10 Gew.-% des Kaugummis umfasst.

44. Kaugummi nach einem der Ansprüche 1-43, wobei die Menge von Emulgiermittel im Bereich von 0 bis 18 Gew.-% des Kaugummis liegt.

45. Kaugummi nach einem der Ansprüche 1-44, wobei die Süßungsmittel aus der Gruppe, umfassend in größerer Menge zu verwendende Süßungsmittel und hochintensive Süßungsmittel und Kombinationen davon, ausgewählt sind.

46. Kaugummi nach einem der Ansprüche 1-45, wobei der Kaugummi Zucker umfasst.

47. Kaugummi nach einem der Ansprüche 1-45, wobei der Kaugummi zuckerfrei ist.

48. Kaugummi nach einem der Ansprüche 1-47, wobei die in größerer Menge zu verwendenden Süßungsmittel eine Menge von etwa 5 bis etwa 95 Gew.-%, vorzugsweise etwa 20 bis etwa 80 Gew.-% des Kaugummis umfassen.

49. Kaugummi nach einem der Ansprüche 1-48, wobei der Kaugummi hochintensive Süßungsmittel in einer Menge von etwa 0 bis etwa 1,2 Gew.-%, vorzugsweise etwa 0,1 bis etwa 0,6 Gew.-% des Kaugummis umfasst.

50. Kaugummi nach einem der Ansprüche 1-49, wobei der Kaugummi Füllstoff in einer Menge von etwa 0 bis etwa 50 Gew.-% des Kaugummis, in typischerer Weise etwa 10 bis etwa 40 Gew.-% des Kaugummis umfasst.

51. Kaugummi nach einem der Ansprüche 1-50, wobei der Kaugummi mindestens ein Färbemittel umfasst.

52. Kaugummi nach einem der Ansprüche 1-51, wobei die Kaugummibestandteile Wirkstoffe umfassen.

53. Kaugummi nach einem der Ansprüche 1-52, wobei der Kaugummi mit einem äußeren Überzug, der aus der Gruppe umfassend harte Überzüge, weiche Überzüge und essbare Filmüberzüge ausgewählt ist, überzogen ist.

54. Kaugummi nach einem der Ansprüche 1-53, wobei der äußere Überzug mindestens einen zusätzlichen Bestandteil, ausgewählt aus der Gruppe umfassend ein Bindemittel, einen Feuchtigkeit absorbierenden Bestandteil, ein filmbildendes Mittel, ein Dispergiermittel, einen Klebrigkeit verhindernden Bestandteil, einen Voluminosität verleihenden Bestandteil, einen Geschmacks- oder Aromastoff, ein Färbemittel, einen pharmazeutisch oder kosmetisch wirksamen Bestandteil, einen Lipidbestandteil, einen Wachsbestandteil, einen Zucker, eine Säure und ein Mittel, das in der Lage ist, den nach dem Kauen erfolgenden Abbau der abbaubaren Polymere zu beschleunigen, umfasst.

55. Kaugummi nach einem der Ansprüche 1-54, wobei das biologisch abbaubare Polymer eine relative Molekülmasse (Mn) im Bereich von 500 bis 400.000 g/mol, vorzugsweise im Bereich von 500 bis 200.000 g/mol (Mn) aufweist.

56. Kaugummi nach einem der Ansprüche 1-55, wobei das biologisch abbaubare Polymer eine relative Molekülmasse (Mn) im Bereich von 500 bis 150.000 g/mol aufweist.

57. Kaugummi nach einem der Ansprüche 1-56, wobei das biologisch abbaubare Polymer eine relative Molekülmasse (Mn) unter etwa 60.000 g/mol aufweist.

58. Kaugummi nach einem der Ansprüche 1-57, wobei der Kaugummi eine elastomere Verbindung in einer Menge von mindestens 0,5%, vorzugsweise mindestens 1%, bezogen auf das Gewicht des Kaugummis, umfasst.

59. Kaugummi nach einem der Ansprüche 1-58, wobei der Kaugummi eine elastomere Verbindung in einer Menge von mindestens 5%, vorzugsweise mindestens 8%, bezogen auf das Gewicht des Kaugummis, umfasst.

60. Kaugummi nach einem der Ansprüche 1-59, wobei der Kaugummi eine elastomere Verbindung in einer Menge innerhalb des Bereichs von etwa 1% bis 40%, bezogen auf das Gewicht des Kaugummis, umfasst.

## Revendications

1. Chewing-gum comprenant au moins un polymère biodégradable dans une quantité de 0,1 % à 95 %, ledit polymère biodégradable ayant une température de transition vitreuse (Tg) supérieure à 40 °C, dans lequel ledit chewing-gum comprenant ledit au moins un polymère biodégradable comprend en outre au moins un composé élastomère, et dans lequel ledit polymère biodégradable a un effet plastifiant sur ledit composé élastomère.

2. Chewing-gum selon la revendication 1, dans lequel ledit chewing-gum comprend ledit au moins un polymère biodégradable dans une quantité d'environ 2 à 60 % en poids.

3. Chewing-gum selon l'une quelconque des revendications 1 et 2, dans lequel ledit chewing-gum est sensiblement dépourvu de résines naturelles.

4. Chewing-gum selon l'une quelconque des revendications 1 à 3, dans lequel ledit chewing-gum comprend ledit polymère biodégradable dans une quantité dans la plage de 2 à 50 %.

5. Chewing-gum selon l'une quelconque des revendications 1 à 4, dans lequel ledit chewing-gum comprend ledit polymère biodégradable dans une quantité dans la plage de 5 à 40 %, de préférence dans la plage de 10 à 30 %.

6. Chewing-gum selon l'une quelconque des revendications 1 à 5, dans lequel ledit chewing-gum comprend ledit polymère biodégradable dans une quantité dans la plage de 5 à 25 %.

7. Chewing-gum selon l'une quelconque des revendications 1 à 6, dans lequel ledit polymère biodégradable a une température de transition vitreuse (Tg) dans la plage de 40 °C à 90 °C.

8. Chewing-gum selon l'une quelconque des revendications 1 à 7, dans lequel ledit polymère biodégradable a une température de transition vitreuse dans la plage de 41 °C à 75 °C.

9. Chewing-gum selon l'une quelconque des revendications 1 à 8, dans lequel ledit polymère biodégradable a une température de transition vitreuse dans la plage de 42 °C à 65 °C.

10. Chewing-gum selon l'une quelconque des revendications 1 à 9, dans lequel ledit polymère biodégradable a une température de transition vitreuse dans la plage de 43 °C à 48 °C.

11. Chewing-gum selon l'une quelconque des revendications 1 à 10, dans lequel ledit chewing-gum comprend moins d'approximativement 5 % en poids de résines naturelles, de préférence moins de 3 % en poids et de manière préférée entre toutes moins d'environ 2 % en poids dudit chewing-gum.

12. Chewing-gum selon l'une quelconque des revendications 1 à 11, dans lequel ledit polymère biodégradable a un poids moléculaire (Mn) dans la plage de 500 à 22 000 g/mol, de préférence dans la plage de 500 à 15 000 g/mol.

13. Chewing-gum selon l'une quelconque des revendications 1 à 12, dans lequel ledit polymère biodégradable est un polyester.

14. Chewing-gum selon l'une quelconque des revendications 1 à 13, dans lequel ledit polymère de polyester biodégradable peut être obtenu par polymérisation par ouverture de cycle de monomères cycliques.

15. Chewing-gum selon l'une quelconque des revendications 1 à 14, dans lequel lesdits monomères cycliques sont choisis dans le groupe des esters cycliques et des carbonates cycliques.

16. Chewing-gum selon l'une quelconque des revendications 1 à 15, dans lequel lesdits monomères cycliques sont choisis dans le groupe constitué par le D,L-lactide, le L-lactide, le glycolide, l'ε-caprolactone, la δ-valérolactone, le carbonate de triméthylène (TMC) et la dioxanone.

17. Chewing-gum selon l'une quelconque des revendications 1 à 16, dans lequel au moins l'un desdits monomères cycliques est un monomère induisant une Tg élevée.

18. Chewing-gum selon l'une quelconque des revendications 1 à 17, dans lequel ledit polyester est un polymère pouvant être obtenu par la polymérisation d'un seul type de monomère induisant une T_{g} élevée.

19. Chewing-gum selon l'une quelconque des revendications 1 à 18, dans lequel ledit polyester est un copolymère pouvant être obtenu par la polymérisation d'au moins deux monomères différents induisant une Tg élevée.

20. Chewing-gum selon l'une quelconque des revendications 1 à 19, dans lequel ledit polyester est un copolymère pouvant être obtenu par la polymérisation d'au moins un monomère induisant une faible Tg avec au moins un monomère induisant une Tg élevée.

21. Chewing-gum selon l'une quelconque des revendications 1 à 20, dans lequel le rapport molaire entre le au moins un monomère induisant une Tg élevée et le au moins un monomère induisant une faible Tg est dans la plage de 75/25 à 99/1, de préférence dans la plage de 85/15 à 99/1.

22. Chewing-gum selon l'une quelconque des revendications 1 à 21, dans lequel le rapport molaire entre le au moins un monomère induisant une Tg élevée et le au moins une monomère induisant une faible Tg est dans la plage de 90/10 à 99/1, de préférence dans la plage de 95/5 à 99/1.

23. Chewing-gum selon l'une quelconque des revendications 1 à 22, dans lequel le rapport molaire entre le au moins un monomère induisant une Tg élevée et le au moins une monomère induisant une faible Tg est dans la plage de 95/5 à 98/2.

24. Chewing-gum selon l'une quelconque des revendications 1 à 23, dans lequel ledit au moins un monomère induisant une Tg élevée est choisi dans le groupe des monomères comprenant le D,L-lactide, le L-lactide et le glycolide.

25. Chewing-gum selon l'une quelconque des revendications 1 à 24, dans lequel ledit au moins un monomère induisant une faible Tg est choisi dans le groupe des monomères comprenant l'ε-caprolactone, la δ-valérolactone, le carbonate de triméthylène (TMC) et la dioxanone.

26. Chewing-gum selon l'une quelconque des revendications 1 à 25, dans lequel ladite polymérisation par ouverture de cycle est initiée par un ou plusieurs initiateurs.

27. Chewing-gum selon l'une quelconque des revendications 1 à 26, dans lequel lesdits initiateurs comprennent environ 0,01 à 1,0 % en poids dudit polymère de polyester biodégradable.

28. Chewing-gum selon l'une quelconque des revendications 1 à 27, dans lequel au moins 50 % en mole, de préférence au moins 70 % en mole desdits initiateurs sont difonctionnels.

29. Chewing-gum selon l'une quelconque des revendications 1 à 28, dans lequel ledit polymère de polyester est sensiblement linéaire.

30. Chewing-gum selon l'une quelconque des revendications 1 à 29, dans lequel ledit polymère de polyester sensiblement linéaire comprend plus de 50 pour cent de chaînes de polymère linéaire.

31. Chewing-gum selon l'une quelconque des revendications 1 à 30, dans lequel ledit polymère de polyester sensiblement linéaire comprend plus de 70 pour cent de chaînes de polymère linéaire.

32. Chewing-gum selon l'une quelconque des revendications 1 à 31, dans lequel ledit polymère de polyester sensiblement linéaire comprend plus de 80 pour cent de chaînes de polymère linéaire.

33. Chewing-gum selon l'une quelconque des revendications 1 à 32, dans lequel ledit polymère de polyester biodégradable peut être obtenu par polymérisation par condensation d'acides polyfonctionnels ou de dérivés de ceux-ci et/ou d'alcools polyfonctionnels ou de dérivés de ceux-ci.

34. Chewing-gum selon l'une quelconque des revendications 1 à 33, dans lequel lesdits acides polyfonctionnels sont choisis dans le groupe des acides lactiques et des acides glycoliques.

35. Chewing-gum selon l'une quelconque des revendications 1 à 34, dans lequel lesdits acides polyfonctionnels sont des acides polyhydroxycarboxyliques ou des acides hydroxycarboxyliques.

36. Chewing-gum selon l'une quelconque des revendications 1 à 35, dans lequel ledit chewing-gum comprend un composé élastomère dans une quantité d'au moins 5 %, de préférence d'au moins 10 % en poids du chewing-gum.

37. Chewing-gum selon l'une quelconque des revendications 1 à 36, dans lequel ledit au moins un composé élastomère est un élastomère biodégradable.

38. Chewing-gum selon l'une quelconque des revendications 1 à 37, dans lequel ledit élastomère biodégradable peut être obtenu par la polymérisation d'au moins un alcool ou dérivé de celui-ci et d'au moins un acide carboxylique ou dérivé de celui-ci.

39. Chewing-gum selon l'une quelconque des revendications 1 à 38, dans lequel la teneur en eau est inférieure à 3 %, de préférence inférieure à 1,5 % et de manière préférée entre toutes inférieure à 1 % en poids du chewing-gum.

40. Chewing-gum selon l'une quelconque des revendications 1 à 39, dans lequel ledit chewing-gum comprend un ou plusieurs ingrédients de chewing-gum choisis dans le groupe comprenant les agents aromatisants, les agents édulcorants, les charges, les ramollissants, les émulsifiants et les ingrédients actifs.

41. Chewing-gum selon l'une quelconque des revendications 1 à 40, dans lequel lesdits agents aromatisants comprennent des aromatisants naturels et synthétiques sous la forme de composants végétaux naturels, d'huiles essentielles, d'essences, d'extraits, de poudres, y compris les acides et d'autres substances capables d'affecter le profil de goût.

42. Chewing-gum selon l'une quelconque des revendications 1 à 41, dans lequel ledit chewing-gum comprend un arôme dans une quantité de 0,01 à environ 25 % en poids, de préférence dans une quantité de 0,1 à environ 5 % en poids, ledit pourcentage étant basé sur le poids total du chewing-gum.

43. Chewing-gum selon l'une quelconque des revendications 1 à 42, dans lequel le chewing-gum comprend au moins un ramollissant dans une quantité d'environ 0 à environ 20 % en poids du chewing-gum, plus typiquement d'environ 0 à environ 10 % en poids du chewing-gum.

44. Chewing-gum selon l'une quelconque des revendications 1 à 43, dans lequel la quantité d'émulsifiant est dans la plage de 0 à 18 % en poids du chewing-gum.

45. Chewing-gum selon l'une quelconque des revendications 1 à 44, dans lequel lesdits agents édulcorants sont choisis dans le groupe comprenant les édulcorants en vrac, et les édulcorants d'intensité élevée, et leurs combinaisons.

46. Chewing-gum selon l'une quelconque des revendications 1 à 45, dans lequel le chewing-gum comprend du sucre.

47. Chewing-gum selon l'une quelconque des revendications 1 à 45, dans lequel le chewing-gum est dépourvu de sucre.

48. Chewing-gum selon l'une quelconque des revendications 1 à 47, dans lequel lesdits édulcorants en vrac comprennent une quantité d'environ 5 à environ 95 %, de préférence d'environ 20 à environ 80 % en poids du chewing-gum.

49. Chewing-gum selon l'une quelconque des revendications 1 à 48, dans lequel le chewing-gum comprend des édulcorants d'intensité élevée dans une quantité d'environ 0 à environ 1,2 %, de préférence d'environ 0,1 à environ 0,6 % en poids du chewing-gum.

50. Chewing-gum selon l'une quelconque des revendications 1 à 49, dans lequel le chewing-gum comprend une charge dans une quantité d'environ 0 à environ 50 % en poids du chewing-gum, plus typiquement d'environ 10 à environ 40 % en poids du chewing-gum.

51. Chewing-gum selon l'une quelconque des revendications 1 à 50, dans lequel chewing-gum comprend au moins un agent colorant.

52. Chewing-gum selon l'une quelconque des revendications 1 à 51, dans lequel lesdits ingrédients de chewing-gum comprennent des ingrédients actifs.

53. Chewing-gum selon l'une quelconque des revendications 1 à 52, dans lequel ledit chewing-gum est revêtu d'un revêtement externe choisi dans le groupe comprenant un revêtement dur, un revêtement mou et un revêtement de film comestible.

54. Chewing-gum selon l'une quelconque des revendications 1 à 53, dans lequel le revêtement externe comprend au moins un composant additif choisi dans le groupe comprenant un agent liant, un composant absorbant l'humidité, un agent de formation de film, un agent de dispersion, un composant anti-collant, un diluant, un agent aromatisant, un agent colorant, un composant actif sur le plan pharmaceutique ou cosmétique, un composant lipide, un composant de cire, un sucre, un acide et un agent capable d'accélérer la dégradation après mâchage des polymères dégradables.

55. Chewing-gum selon l'une quelconque des revendications 1 à 54, dans lequel ledit polymère biodégradable a un poids moléculaire (Mn) dans la plage de 500 à 400 000 g/mol, de préférence dans la plage de 500 à 200 000 g/mol (Mn).

56. Chewing-gum selon l'une quelconque des revendications 1 à 55, dans lequel ledit polymère biodégradable a un poids moléculaire (Mn) dans la plage de 500 à 150 000 g/mol.

57. Chewing-gum selon l'une quelconque des revendications 1 à 56, dans lequel ledit polymère biodégradable a un poids moléculaire (Mn) inférieur à environ 60 000 g/mol.

58. Chewing-gum selon l'une quelconque des revendications 1 à 57, dans lequel ledit chewing-gum comprend un composé élastomère dans une quantité d'au moins 0,5 %, de préférence d'au moins 1 % en poids du chewing-gum.

59. Chewing-gum selon l'une quelconque des revendications 1 à 58, dans lequel ledit chewing-gum comprend un composé élastomère dans une quantité d'au moins 5 %, de préférence d'au moins 8 % en poids du chewing-gum.

60. Chewing-gum selon l'une quelconque des revendications 1 à 59, dans lequel ledit chewing-gum comprend un composé élastomère dans une quantité dans la plage d'environ 1 % à 40 % en poids du chewing-gum.
